# EUROPEAN PATENT APPLICATION

(11) **EP 4 223 451 A1**
(43) Date of publication of application: **09.08.2023**
(21) Application number: 20956237.0
(22) Date of filing: 30.09.2020
(51) Int. Cl.: B23Q 17/24, B23K 26/03

(54) **MACHINING SYSTEM AND DISPLAY DEVICE**

(71) Applicant: NIKON CORPORATION, Minato-ku Tokyo 108-6290 (JP)
(72) Inventor: NAITO, Kaneyuki, Tokyo 108-6290 (JP)
(74) Representative: Hoffmann Eitle
(86) International application number: PCT/JP2020/037160
(87) International publication number: WO 2022/070309

(57) **Abstract**

A processing system includes: a processing apparatus configured to process an object; a measurement apparatus configured to measure a three-dimensional shape of at least a part of the object; and a control apparatus configured to control the processing apparatus, the control apparatus controls the processing apparatus based on three-dimensional shape information of a second area of a surface of the object, three-dimensional shape information is calculated based on a measured result obtained by measuring a first area of the surface of the object by using the measurement apparatus and model information representing a three-dimensional model of at least a part of the object, the three-dimensional shape information of the second area is calculated without performing a measurement of a three-dimensional shape of the second area by the measurement apparatus, at least a part of the second area is processed by the processing apparatus based on the three-dimensional shape information of the second area.

## Description

### Technical Field

The present invention relates to a technical field of a processing system configured to process an object and a display apparatus used for the processing system.

### Background Art

A Patent Literature 1 discloses, as a processing system configured to process an object, a processing apparatus that forms a structure by irradiating a surface of the object with a processing light. This type of processing apparatus is required to process the object properly.

### Citation List

### Patent Literature

Patent Literature 1: WO2000/054925A

### Summary of Invention

A first aspect provide a processing system including: a processing apparatus configured to process an object; a measurement apparatus configured to measure a three-dimensional shape of at least a part of the object; and a control apparatus configured to control the processing apparatus, the control apparatus controls the processing apparatus based on three-dimensional shape information of a second area of a surface of the object, the three-dimensional shape information being calculated based on a measured result and model information, the measured result being obtained by measuring a first area of the surface of the object by using the measurement apparatus, the model information indicating a three-dimensional model of at least a part of the object, the three-dimensional shape information of the second area is calculated without performing a measurement of a three-dimensional shape of the second area by the measurement apparatus, at least a part of the second area is processed by the processing apparatus based on the three-dimensional shape information of the second area.

A second aspect provides a processing system including: a processing apparatus configured to process an object; a measurement apparatus configured to measure a three-dimensional shape of at least a part of the object; and a display apparatus configured to display information related to the object, the display apparatus displays, after the processing apparatus processes the object: object information indicating a shape of the processed object; first processing area information indicating a first processing area that has been processed based on a measured result by the measurement apparatus; and second processing area information indicating a second processing area that has been processed based on model information indicating a three-dimensional model of at least a part of the object.

A third aspect provides a processing system including: a processing apparatus configured to process an object; a measurement apparatus configured to measure a shape of at least a part of the object; and a control apparatus configured to control the processing apparatus, the control apparatus controls the processing apparatus based on a measured result and model information, the measured result being obtained by measuring a first area of a surface of the object by using the measurement apparatus, the model information indicating a shape of a second area of the surface of the object.

A fourth aspect provides a processing system including: a processing apparatus configured to process an object; a measurement apparatus configured to measure a shape of at least a part of the object; and a display apparatus configured to display information related to the object, the display apparatus displays: object information indicating a shape of the processed object; first processing area information related to a first processing area that has been processed based on a measured result by the measurement apparatus; and second processing area information related to a second processing area that has been processed based on at least a part of model information indicating a model of the object.

A fifth aspect provides a processing system including: a processing apparatus configured to process an object; a measurement apparatus configured to measure a shape of at least a part of the object; and a display apparatus configured to display information related to the object, the display apparatus displays the information related to the object based on a result by the measurement apparatus and model information indicating a model of the object.

A sixth aspect provides a processing system including: a processing apparatus configured to process an object; a measurement apparatus configured to measure a shape of at least a part of the object; and a control apparatus configured to control the processing apparatus, the measurement apparatus measures a second area of a surface of the object based on a measured result obtained by measuring a first area of the surface of the object and model information indicating a shape of the second area of the surface of the object, the control apparatus controls the processing apparatus based on at least a measured result of the second area.

A seventh aspect provides a processing system including: a processing apparatus configured to process an object; a first measurement apparatus configured to measure a shape of at least a part of the object; a second measurement apparatus configured to measure a shape of at least a part of the object; and a control apparatus configured to control the processing apparatus, the second measurement apparatus measures a second area of a surface of the object based on a first measured result obtained by measuring a first area of the surface of the object by the first measurement apparatus and model information indicating a shape of the second area of the surface of the object, the control apparatus controls the processing apparatus based on at least a measured result of the second area.

An eighth aspect provides a display apparatus that is configured to display information related to an object, the object is processed by a processing system, the processing system includes: a processing apparatus configured to process an object; a measurement apparatus configured to measure a shape of at least a part of the object; and a control apparatus configured to control the processing apparatus based on a measured result obtained by measuring a first area of a surface of the object by using the measurement apparatus and model information indicating a shape of a second area of the surface of the object, the display apparatus displays: object information indicating a shape of the processed object; first area information related to the first area; and second area information related to the second area.

A ninth aspect provides a display apparatus that is configured to display information related to an object, the object is processed by a processing system, the processing system includes: a processing apparatus configured to process an object; and a measurement apparatus configured to measure a shape of at least a part of the object, the display apparatus displays: object information indicating a shape of the processed object; first processing area information indicating a first processing area that has been processed based on a measured result by the measurement apparatus; and second processing area information indicating a second processing area that has been processed based on at least a part of model information indicating a model of the object.

### Brief Description of Drawings

[FIG. 1] FIG. 1 is a perspective view that illustrates an entire configuration of a processing system in a first example embodiment.
[FIG. 2] FIG. 2 is a system configuration diagram that illustrates a system configuration of the processing system in the first example embodiment.
[FIG. 3] FIG. 3 is a perspective view that illustrates one example of a workpiece.
[FIG. 4] FIG. 4 is a flowchart that illustrates a flow of a first processing operation.
[FIG. 5] FIG. 5 is a perspective view that illustrates a measurement apparatus measuring a shape of a turbine which is one example of the workpiece.
[FIG. 6] Each of FIG. 6A and FIG 6B is a schematic diagram for explaining an operation for correcting information related to a state of a second area.
[FIG. 7] FIG. 7 is a conceptional diagram that illustrates a pattern matching between a workpiece model and the workpiece indicated by a workpiece measurement information.
[FIG. 8] FIG. 8 is a cross-sectional view that illustrates a moving trajectory of a processing head moving relative to the workpiece based on processing path information.
[FIG. 9] Each of FIG. 9A to FIG. 9C is a cross-sectional view that illustrates the moving trajectory of the processing head moving relative to the workpiece based on the processing path information.
[FIG. 10] Each of FIG. 10A to FIG. 10C is a cross-sectional view that illustrates the moving trajectory of the processing head moving relative to the workpiece based on the processing path information.
[FIG. 11] FIG. 11 is a flowchart that illustrates a flow of a second processing operation.
[FIG. 12] FIG. 12 is a flowchart that illustrates a flow of a third processing operation.
[FIG. 13] FIG. 13A is a perspective view that illustrates the measurement apparatus measuring a shape of the workpiece when a positional relationship between the measurement apparatus and the workpiece is a first positional relationship, and FIG. 13B is a perspective view that illustrates the measurement apparatus measuring the shape of the workpiece after the positional relationship between the measurement apparatus and the workpiece is changed from the first positional relationship to a second positional relationship.
[FIG. 14] FIG. 14 is a flowchart that illustrates a flow of a fourth processing operation.
[FIG. 15] FIG. 15 is a flowchart that illustrates a flow of a fifth processing operation.
[FIG. 16] FIG. 16 is a flowchart that illustrates a flow of a sixth processing operation.
[FIG. 17] FIG. 17 is a flowchart that illustrates a flow of a measurement operation.
[FIG. 18] FIG. 18 is a system configuration diagram that illustrates a system configuration of the processing system in a second example embodiment.
[FIG. 19] FIG. 19 is a planar view that illustrates one example of an image in which workpiece shape information, first area information, and second area information are included.
[FIG. 20] FIG. 20 is a perspective view that illustrates an entire configuration of a processing system in a third example embodiment.
[FIG. 21] FIG. 21 is a system configuration diagram that illustrates a system configuration of the processing system in the third example embodiment.
[FIG. 22] FIG. 22 is a perspective view that illustrates an entire configuration of a processing system in a fourth example embodiment.
[FIG. 23] FIG. 23 is a system configuration diagram that illustrates a system configuration of the processing system in the fourth example embodiment.

### Description of Example embodiments

Next, an example embodiment of a processing system and a display apparatus will be described with reference to drawings. In the below-described description, the example embodiment of a processing system and a display apparatus will be described by using a processing system SYS configured to process a workpiece W by using a processing light EL. However, the present invention is not limited to the below-described example embodiment.

Moreover, in the below-described description, a positional relationship of various components included in the processing system SYS will be described by using an XYZ rectangular coordinate system that is defined by an X-axis, a Y-axis, and a Z-axis that are perpendicular to one another. Note that each of an X-axis direction and a Y-axis direction is assumed to be a horizontal direction (namely, a predetermined direction in a horizontal plane), and a Z-axis direction is assumed to be a vertical direction (namely, a direction that is perpendicular to the horizontal plane, and substantially a vertical direction) in the below-described description, for convenience of the description. Moreover, rotational directions (in other words, inclination directions) around the X-axis, the Y-axis, and the Z-axis are referred to as a θX direction, a θY direction, and a θZ direction, respectively.

### (1) Processing System SYSa in First Example Embodiment

Firstly, a processing system SYS in a first example embodiment (in the below-described description, it is referred to as a "processing system SYSa") will be described.

### (1-1) Configuration of Processing System SYSa

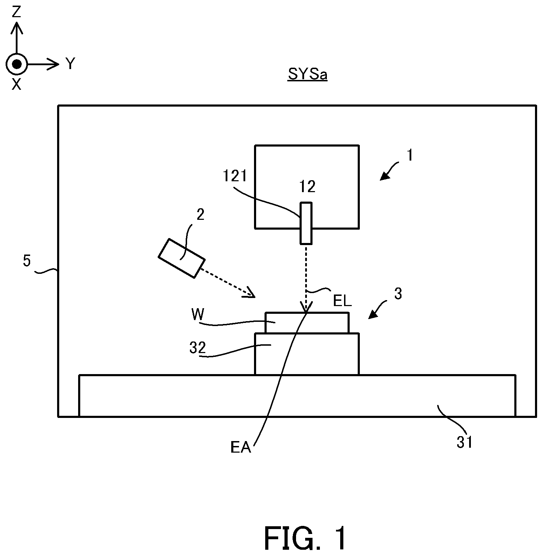

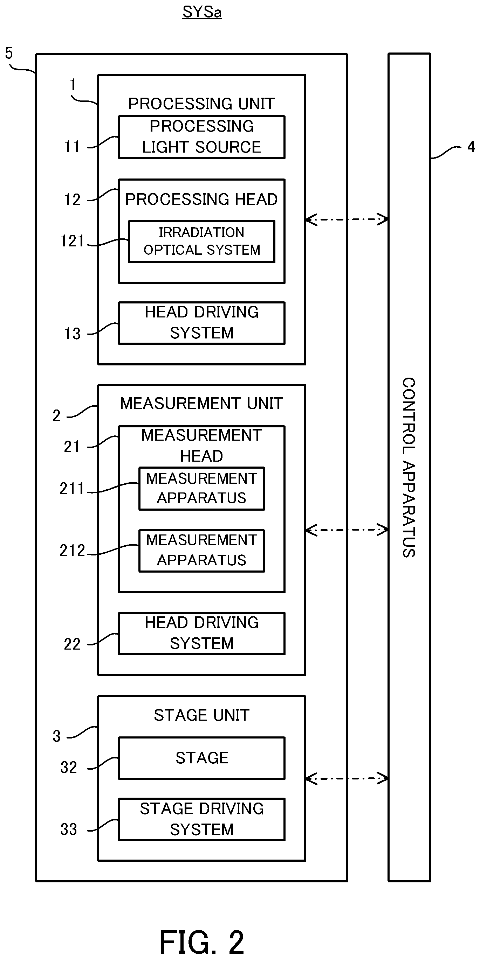

Firstly, with reference to FIG. 1 and FIG. 2, a configuration of the processing system SYSa in the first example embodiment will be described. FIG. 1 is a perspective view that illustrates the configuration of the processing system SYSa in the first example embodiment. FIG. 2 is a system configuration diagram that illustrates a system configuration of the processing system SYSa in the first example embodiment.

As illustrated in FIG. 1 and FIG. 2, the processing system SYSa includes a processing unit 1, a measurement unit 2, a stage unit 3, and a control apparatus 4. The processing unit 1, the measurement unit 2, and the stage unit 3 are contained in a housing 5. However, at least a part of the processing unit 1, the measurement unit 2, and the stage unit 3 may not be contained in the housing 5. Namely, the processing system SYSa may not include the housing 5 in which the processing unit 1, the measurement unit 2, and the stage unit 3 are contained. An inner space in the housing 5 may be purged by purge gas such as Nitrogen gas, Argon gas, and so on, or may not be purged by the purge gas. The inner space in the housing 5 may be vacuumed or may not be vacuumed.

The processing unit 1 is configured to process the workpiece W under the control of the control apparatus 4. The workpiece W is an object processed by the processing unit 1. The workpiece W may be a metal, may be an alloy (for example, duralumin and the like), may be a semiconductor (for example, a silicon), may be a resin, may be a composite material such as a CFRP (Carbon Fiber Reinforced Plastic), a painting material (as one example a film of painting material that is coated on a base member), may be a glass or may be an object that is made from any other material, for example.

The processing unit 1 irradiates the workpiece W with the processing light EL in order to process the workpiece W. The processing light EL may be any type of light, as long as the workpiece W is processed by irradiating the workpiece W with it. In the first example embodiment, an example in which the processing light EL is a laser light will be described, however, the processing light EL may be a light that is different from the laser light. Furthermore, a wavelength of the processing light EL may be any wavelength, as long as the workpiece W is processed by irradiating the workpiece W with it. For example, the processing light EL may be a visible light, or may be an invisible light (for example, at least one of an infrared light, an ultraviolet light, an extreme ultraviolet light and the like). The processing light EL may include a pulsed light (for example, a pulsed light an ON time of which is equal to or shorter than pico-seconds). Alternatively, the processing light EL may not include the pulsed light. In other words, the processing light EL may be a continuous light.

The processing unit 1 may perform a removal processing for removing a part of the workpiece W by irradiating the workpiece W with the processing light EL. When the removal processing is performed, the processing unit 1 may form a riblet structure on the workpiece W. The riblet structure is a structure by which a resistance (especially, a frictional resistance, a turbulent frictional resistance) of the surface of the workpiece W to fluid is reducible. The riblet structure may include a structure by which noise generated when the fluid and the surface of the workpiece W relatively move is reducible. The riblet structure may include a structure in which a plurality of grooves each of which extends along a first direction (for example, the Y axis direction) that is along a surface of the workpiece W are arranged along a second direction (for example, the X axis direction) that is along the surface of the workpiece W and that intersects with the first direction, for example. Note that the fluid here means any medium (for example, at least one of a gas and a liquid) that flows relative to the surface of the workpiece W. For example, the medium may be referred to as the fluid when the surface of workpiece W moves relative to the medium although the medium itself is static. Note that a state where the medium is static may mean a state where the medium does not move relative to a predetermined reference object (for example, surface of a ground).

When the removal processing is performed, the processing system SYSa may form any structure having any shape on the surface of the workpiece W. A structure for generating a swirl in a flow of the fluid on the surface of the workpiece W is one example of any structure. A structure for giving a hydrophobic property to the workpiece W is one example of any structure. A fine texture structure (typically, a concave and convex structure) formed regularly or irregularly in a micro / nano-meter order is one example of any structure. This fine texture structure may include at least one of a shark skin structure or a dimple structure that has a function of reducing a resistance from a fluid (a liquid and / or a gas). The fine texture structure may include a lotus leaf surface structure that has at least one of a liquid repellent function and a self-cleaning function (for example, has a lotus effect). The fine texture structure may include at least one of a fine protrusion structure that has a liquid transporting function (US2017/0044002A1), a concave and convex structure that has a lyophile effect, a concave and convex structure that has an antifouling effect, a moth eye structure that has at least one of a reflectance reduction function and a liquid repellent function, a concave and convex structure that intensifies only light of a specific wavelength by interference to have a structural color, a pillar array structure that has an adhesion function using van der Waals force, a concave and convex structure that has an aerodynamic noise reduction function, a honeycomb structure that has a droplet collection function, a concave and convex structure that improves an adherence to a layer formed on a surface and so on. Here, the fine texture structure may not have specific function. Note that the processing system SYSa may smooth the surface of the workpiece W. Here, smoothing the surface may mean processing the surface so that the surface that has been processed is smoother than the surface that is not yet processed. Moreover, the processing system SYSa may remove burr existing on the surface of the workpiece W.

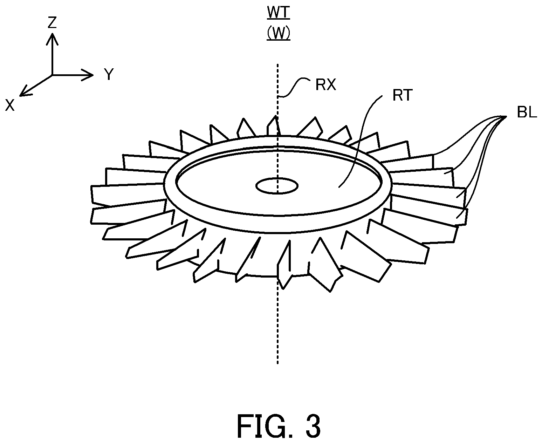

A turbine WT illustrated in FIG. 3 is one example of the workpiece W on which the removal processing is performed (for example, on which the riblet structure is formed by the removal processing). As illustrated in FIG. 3, the turbine WT may include: a disc-shaped rotator RT that is rotatable around a rotational axis RX; and a plurality of turbine blades BL extending from an outer surface of the rotator RT radially. In this case, the processing unit 1 may form the riblet structure on at least a part of surfaces of the plurality of turbine blades BL. The processing unit 1 may form the riblet structure on at least a part of a surface of the rotator RT. Note that a fan or a propeller is another example of the workpiece W on which the removal processing is performed, although it is not illustrated. The fan is a member that is used in an air blower and that forms a flow of gas. The propeller is a member that converts a rotational force outputted from a power source including at least one of an engine and a motor into a driving power of a movable body including at least one of an airplane, a ship and so on, for example. Moreover, a mold is another example of the workpiece W on which the removal processing is performed, although it is not illustrated. In this case, the mold formed by the removal processing may be used to form at least one of a film, a resinous component and so on having a surface on which the riblet structure (alternatively, another structure) is formed. Note that the workpiece W is not limited to the object illustrated as one example here.

The processing unit 1 may perform an additive processing for adding new structural object to the workpiece W by irradiating the workpiece W with the processing light EL, in addition to or instead of the removal processing. In this case, the processing unit 1 may form the above-described riblet structure on the surface of the workpiece W by performing the additive processing. The processing unit 1 may perform a marking processing for forming a desired mark on the surface of the workpiece W by irradiating the workpiece W with the processing light EL, in addition to or instead of at least one of the removal processing and the additive processing.

In order to process and measure the workpiece W, the processing unit 1 includes a processing light source 11 that generates the processing light EL, a processing head 12, and a head driving system 13.

The processing head 12 irradiates the workpiece W with the processing light EL from the processing light source 11. The processing head 12 processes the workpiece W by irradiating the workpiece W with the processing light EL. Thus, the processing head 12 may be referred to as a processing apparatus. In order to irradiate the workpiece W with the processing light EL, the processing head 12 includes an irradiation optical system 121. The processing head 12 irradiates the workpiece W with the processing light EL through the irradiation optical system 121. The irradiation optical system 121 may condenses the processing light EL on the surface of the workpiece W, for example. The irradiation optical system 121 may control an optical characteristic of the processing light EL. At least one of an intensity of the processing light EL, a temporal change of the intensity of the processing light EL, a condensed position of the processing light EL, an incident angle of the processing light EL relative to the workpiece W, a shape of the processing light EL in an optical plane that intersects with an optical axis of the irradiation optical system 121, an intensity distribution of the processing light EL in this optical plane, and the number of pulse of the processing light EL (in a case where the processing light EL is the pulsed light) is one example of the optical characteristics of the processing light EL.

The head driving system 13 moves the processing head 12 along at least one of the X-axis, the Y-axis and the Z-axis under the control of the control apparatus 4. Note that the head driving system 13 may move the processing head 12 along at least one of the θX direction, the θY direction and the θZ direction, in addition to or instead of at least one of the X axis, the Y axis, the Z axis. When the processing head 12 moves, a positional relationship between the processing head 12 and a below-described stage 32 (furthermore, the workpiece W placed on the stage 32) changes. Furthermore, when the positional relationship between the processing head 12 and each of the stage 32 and the workpiece W changes, an irradiation position of the processing light EL on the workpiece W changes.

The measurement unit 2 includes a measurement head 21 and a head driving system 22. The measurement head 21 includes a measurement apparatuses 211 and 212. However, the measurement head 21 may include either one of the measurement apparatuses 211 and 212 and may not include the other one of the measurement apparatuses 211 and 212.

Each of the measurement apparatuses 211 and 212 is configured to measure a state of the measurement target object. In the present example embodiment, an example in which at least a part of the workpiece W is the measurement target object will be described. However, the measurement target object may include an object different from the workpiece W. In this case, each of the measurement apparatuses 211 and 212 may measure the state of at least a part of the workpiece W. A measured result obtained by the measurement apparatuses 211 and 212 measuring at least a part of the workpiece W (in the below described description, it is referred to as a "workpiece measurement information") is outputted from the measurement unit 2 to the control apparatus 4.

The state of the workpiece W may include a position of the workpiece W. The position of the workpiece W may include a position of the surface of the workpiece W. The position of the surface of the workpiece W may include a position of each surface part, which is obtained by segmentalizing the surface of the workpiece W, in at least one of the X-axis direction, the Y-axis direction and the Z-axis direction. The position of the surface of the workpiece W may include a position of each surface part, which is obtained by segmentalizing the surface of the workpiece W, in at least one of the θX direction, the θY direction and the θZ direction. Note that the position of each surface part in at least one of the θX direction, the θY direction and the θZ direction may be regarded to be equivalent to an attitude of each surface part (namely, a direction of each surface part (for example, a direction of a normal line of each surface part), and it is substantially equivalent to an inclined amount of each surface part with respect to at least one of the X-axis, the Y-axis and the Z-axis). In this case, it can be said that the state of the workpiece substantially includes a shape of the workpiece W. Moreover, the state of the workpiece W may include a size (for example, a size in at least one of the X-axis direction, the Y-axis direction and the Z-axis direction) of the workpiece W.

Each of the measurement apparatuses 211 and 212 may measure, as the shape of at least a part of the workpiece W, a three-dimensional shape of at least a part of the workpiece W. However, each of the measurement apparatuses 211 and 212 may measure a two-dimensional shape of at least a part of the workpiece W. Each of the measurement apparatuses 211 and 212 may measure a one-dimensional shape (namely, a length) of at least a part of the workpiece W.

A measurement accuracy (in other words, a measurement resolution) of the measurement apparatus 211 is different from a measurement accuracy of the measurement apparatus 212. In the first example embodiment, an example in which the measurement accuracy of the measurement apparatus 212 is lower than the measurement accuracy of the measurement apparatus 211 will be described. When the measurement accuracy of the measurement apparatus 212 is lower than the measurement accuracy of the measurement apparatus 211, the measurement apparatus 212 may be a measurement apparatus that measures a relatively wide range with a relatively low measurement accuracy (in other words, roughly or coarsely), the measurement apparatus 211 may be a measurement apparatus that measures a relatively narrow range with a relatively high measurement accuracy (in other words, finely or densely), the measurement apparatus 212 may be measurement apparatus for a wide area, and the measurement apparatus 211 may be a measurement for a narrow area. A time required for the measurement by the measurement apparatus 211 may be longer than a time required for the measurement by the measurement apparatus 212. Specifically, a time required for the measurement of one part of one measurement target object by the measurement apparatus 211 may be longer than a time required for the measurement of the same one part of the same one measurement target object by the measurement apparatus 212. However, the measurement accuracy of the measurement apparatus 212 may be equal to the measurement accuracy of the measurement apparatus 211.

Note that the measurement accuracy may mean a limit value of a fineness of the measurement (for example, an index value for evaluating a minimum measurable size). The measurement accuracy may mean a size of a measurement error relative to a size (for example, a length) of the measurement target object (in this case, the measurement accuracy is higher as the measurement error relative to the size of the measurement target object is smaller). When the measured result is obtained as point cloud data, the measurement accuracy may mean a dispersion accuracy of the point cloud. When a measurement operation is performed a plurality of times, the measurement accuracy may mean a dispersion of the measured result by the plurality of measurement operations (namely, an accuracy of repeated measurement operations). The measurement accuracy may mean another accuracy.

Each of the measurement apparatuses 211 and 212 measures the state of at least a part of the workpiece W in a non-contact manner. For example, each of the measurement apparatuses 211 and 212 may include an optical measurement apparatus configured to optically measure the stage of at least a part of the workpiece W. At least one of an imaging apparatus (namely, a camera) configured to capture an image of the workpiece W, a measurement apparatus using a light section method that projects a slit light on the surface of the workpiece W and measures a shape of the projected slit light, a measurement apparatus using a pattern projection method that projects a light pattern on the surface of the workpiece W and measures a shape of the projected pattern, a measurement apparatus using a time of flight method that performs an operation, which emits a light to the surface of the workpiece W and measures a distance to the workpiece W based on an elapsed time until the emitted light returns, at plurality of positions on the workpiece W, a measurement apparatus using a moiré topography method ( specifically, a grid irradiation method or a grid projection method), a measurement apparatus using a holography interference method, a measurement apparatus using an auto collimation method, a measurement apparatus using a stereo method, a measurement apparatus using an astigmatism method, a measurement apparatus using a critical angle method, a measurement apparatus using a knife edge method, a measurement apparatus using an interference measurement method and a measurement apparatus using a confocal method is one example of the optical measurement apparatus. In any case, each of the measurement apparatuses 211 and 212 may include a light receiver that optically receives a light from at least a part of the workpiece W. The light that is optically received by the light receiver and that is from at least a part of the workpiece W may include a light caused by a measurement light with which the workpiece W is irradiated to measure the state of the workpiece W (for example, at least one of a reflected light, a scattered light and a transmitted light of the measurement light). The light that is optically received by the light receiver and that is from at least a part of the workpiece W may include a light caused by an environment light (for example, a light from the workpiece W that is irradiated with the environment light).

The measurement apparatus 211 is configured to measure at least a part of the workpiece W that is included in a measurement field (in other words, a measurable range) of the measurement apparatus 211. On the other hand, the measurement apparatus 211 is not capable of measuring at least a part of the workpiece W that is not included in the measurement field of the measurement apparatus 211. Here, the measurement field may mean an area satisfying such a condition that the light from the object included in the area is optically receivable by the light receiver of the measurement apparatus 211. Note that the measurement apparatus 212 is configured to measure at least a part of the workpiece W that is included in a measurement field of the measurement apparatus 212, and is not capable of measuring at least a part of the workpiece W that is not included in the measurement field of the measurement apparatus 212, as with the measurement apparatus 211.

A size of the measurement field of the measurement apparatus 211 is different from a size of the measurement field of the measurement apparatus 212. In the first example embodiment, an example in which the size of the measurement field of the measurement apparatus 212 is larger than the size of the measurement field of the measurement apparatus 211 will be described. In this case, the measurement field of the measurement apparatus 211 may be included in the measurement field of the measurement apparatus 212. When the measurement field of the measurement apparatus 211 is included in the measurement field of the measurement apparatus 212, the measurement apparatus 212 is capable of measuring the state of at least a part of the workpiece W that is not measurable by the measurement apparatus 211. However, the size of the measurement field of the measurement apparatus 212 may be smaller than the size of the measurement field of the measurement apparatus 211 The size of the measurement field of the measurement apparatus 212 may be equal to the size of the measurement field of the measurement apparatus 211. At least a part of the measurement field of the measurement apparatus 211 may not be included in at least a part of the measurement field of the measurement apparatus 212.

The head driving system 22 is configured to move the measurement head 21 along at least one of the X-axis direction, the Y-axis direction, the Z-axis direction, the θX direction, the θY direction and the θZ direction, under the control of the control apparatus 4. Namely, the measurement head 21 (more specifically, each of the measurement apparatuses 211 and 212 of the measurement head 21) is movable by the head driving system 22. Note that moving the measurement head 21 along at least one of the θX direction, the θY direction and the θZ direction may be regarded to be equivalent to changing an attitude of the measurement head 21 around at least one of the X-axis, the Y-axis and the Z-axis. Alternatively, moving the measurement head 21 along at least one of the θX direction, the θY direction and the θZ direction may be regarded to be equivalent to rotating (or rotationally moving) the measurement head 21 around at least one of the X-axis, the Y-axis and the Z-axis. When the measurement head 21 moves, a positional relationship between the measurement head 21 and the below-described stage 32 (furthermore, the workpiece W placed on the stage 32) changes. Furthermore, when the positional relationship between the measurement head 21 and each of the stage 32 and the workpiece W changes, a positional relationship between the measurement fields of the measurement apparatuses 211 and 212 and each of the stage 32 and the workpiece W changes.

The stage unit 3 includes a surface plate 31, the stage 32, and a stage driving system 33.

The surface plate 31 is disposed on a bottom surface of the housing 5 (alternatively, a support surface such as a floor surface on which the housing 5 is placed). The stage 32 is disposed on the surface plate 31. A non-illustrated vibration isolator that reduces a transmission of vibration from the surface plate 31 to the stage 32 may be disposed between the surface plate 31 and the bottom surface of the housing 5 or the support surface such as the floor surface on which the housing 5 is placed. Note that the stage 32 may be configured to be supported by an air-bearing in a floating stage on the surface plate 31.

The workpiece W is placed on the stage 32. The stage 32 may not hold the workpiece W placed on the stage 32. Namely, the stage 32 may not apply, to the workpiece W placed on the stage 32, a holding force for holding the workpiece W. Alternatively, the stage 32 may hold the workpiece W placed on the stage 32. Namely, the stage 32 may apply, to the workpiece W placed on the stage 32, the holding force for holding the workpiece W. for example, the stage 32 may hold the workpiece W by vacuum-sucking and / or electro-statically-sucking the workpiece W.

The stage driving system 33 is configured to move the stage 32 along at least one of the X-axis direction, the Y-axis direction, the Z-axis direction, the θX direction, the θY direction, and the θZ direction. Note that moving the stage 32 along at least one of the θX direction, the θY direction and the θZ direction may be regarded to be equivalent to changing an attitude of the stage 32 (furthermore, the workpiece W placed on the stage 32) around at least one of the X-axis, the Y-axis and the Z-axis. Alternatively, moving the stage 32 along at least one of the θX direction, the θY direction, and the θZ direction may be regarded to be equivalent to rotating (or rotationally moving) the stage 32 around at least one of the X-axis, the Y-axis, and the Z-axis.

When the stage 32 moves, a positional relationship between the stage 32 (furthermore, the workpiece W placed on the stage 32) and each of the processing head 12 and the measurement head 21 changes. Therefore, moving the stage 32 is equivalent to changing the positional relationship between each of the stage 32 and the workpiece W and each of the processing head 12 and the measurement head 21. Furthermore, when the positional relationship between the workpiece W and the processing head 12 changes, the irradiation position of the processing light EL on the workpiece W changes. Furthermore, when the positional relationship between the workpiece W and the measurement head 21 changes, the positional relationship between the workpiece W and the measurement fields of the measurement apparatuses 211 and 212 changes.

The control apparatus 4 controls the operation of the processing system SYSa. For example, the control apparatus 4 may generate processing control information for processing the workpiece W and control at least one of the processing unit 1, the measurement unit 2, and the stage unit 3 based on the processing control information so that the workpiece W is processed based on the generated processing control information. Namely, the control apparatus 4 may control a processing of the workpiece W. For example, the control apparatus 4 may generate measurement control information for measuring the workpiece W and control at least one of the processing unit 1, the measurement unit 2, and the stage unit 3 based on the measurement control information that the workpiece W is measured based on the generated measurement control information. Namely, the control apparatus 4 may control a measurement of the workpiece W.

The control apparatus 4 may include an arithmetic apparatus and a storage apparatus, for example. The arithmetic apparatus may include at least one of a CPU (Central Processing Unit) and a GPU (Graphical Processing Unit), for example. The control apparatus 4 serves as an apparatus for controlling the operation of the processing system SYSa by means of the arithmetic apparatus executing a computer program. The computer program is a computer program that allows the control apparatus 4 (for example, the arithmetic apparatus) to execute (namely, to perform) a below-described operation that should be executed by the control apparatus 4. Namely, the computer program is a computer program that allows the control apparatus 4 to function so as to make the processing system SYSa execute the below-described operation. The computer program executed by the arithmetic apparatus may be recorded in the storage apparatus (namely, a recording medium) of the control apparatus 4, or may be recorded in any recording medium (for example, a hard disk or a semiconductor memory) that is built in the control apparatus 4 or that is attachable to the control apparatus 4. Alternatively, the arithmetic apparatus may download the computer program that should be executed from an apparatus external to the control apparatus 4 through a network interface.

The control apparatus 4 may not be disposed of in the processing system SYSa. For example, the control apparatus 4 may be disposed at the outside of the processing system SYSa as a server or the like. In this case, the control apparatus 4 may be connected to the processing system SYSa through a wired and / or wireless network (alternatively, a data bus and / or a communication line). A network using a serial-bus-type interface such as at least one of IEEE1394, RS-232x, RS-422, RS-423, RS-485, and USB may be used as the wired network. A network using a parallel-bus-type interface may be used as the wired network. A network using an interface that is compatible to Ethernet (a registered trademark), such as at least one of 10-BASE-T, 100BASE-TX, or 1000BASE-T, may be used as the wired network. A network using an electrical wave may be used as the wireless network. A network that is compatible with IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 4 and the processing system SYSa may be configured to transmit and receive various information through the network. Moreover, the control apparatus 4 may be configured to transmit information such as a command and a control parameter to the processing system SYSa through the network. The processing system SYSa may include a receiving apparatus that receives the information, such as the command and the control parameter from the control apparatus 4 through the network. Alternatively, a first control apparatus that performs a part of the processing performed by the control apparatus 4 may be disposed in the processing system SYSa and a second control apparatus that performs another part of the processing performed by the control apparatus 4 may be disposed at the outside of the processing system SYSa.

Note that the recording medium recording therein the computer program that should be executed by the arithmetic apparatus may include an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program. The recording medium may include a device that is configured to record the computer program (for example, a device for a universal use or a device for an exclusive use in which the computer program is embedded to be executable in a form of at least one of a software, a firmware and the like). Moreover, each process or function included in the computer program may be realized by a logical process block that is realized in the control apparatus 4 by means of the control apparatus 4 (namely, a computer) executing the computer program, may be realized by a hardware such as a predetermined gate array (a FPGA, an ASIC) of the control apparatus 4, or may be realized in a form in which the logical process block and a partial hardware module that realizes an partial element of the hardware are combined.

### (1-2) Operation of Processing System SYSa

Next, an operation of the processing system SYSa will be described. As described above, the processing system SYSa processes the workpiece W. Namely, the processing system SYSa performs a processing operation for processing the workpiece W. Moreover, the processing system SYSa measures the workpiece W. Namely, the processing system SYSa performs a measurement operation for measuring the workpiece W. Thus, in the below-described description, the processing operation and the measurement operation will be described in order.

### (1-2-1) Processing Operation

Firstly, the processing operation for processing the workpiece W will be described. In the first example embodiment, the processing system SYSa performs at least one of a first processing operation to a sixth processing operation. Thus, in the below-described description, the first processing operation to the sixth processing operation will be described in order.

### (1-2-1-1) First Processing Operation

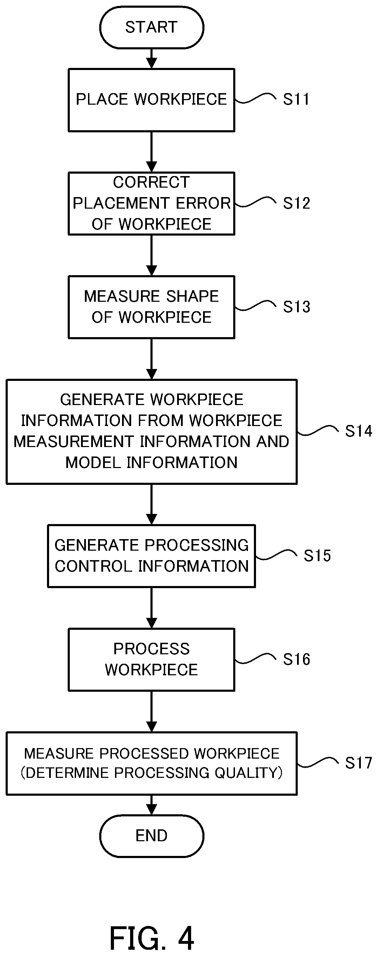

Firstly, with reference to FIG. 4, the first processing operation will be described. FIG. 4 is a flowchart that illustrates a flow of the first processing operation.

As illustrated in FIG. 4, firstly, the workpiece W is placed on the stage 32 (a step S11). For example, the workpiece W may be placed on the stage 32 by an operator of the processing system SYSa. In this case, the processing system SYSa may present, to the operator, information related to a target placement position at which the workpiece W should be placed on the stage 32. For example, the processing system SYSa may present, to the operator, the information related to the target placement position by disposing a marker (for example, a marker formed by an emission device such as a LED) indicating the target placement position on the stage 32. The operator may place the workpiece W at the target placement position based on the presented information. Note that the workpiece W may be placed on the stage 32 by using a transport robot.

Then, the processing system SYSa corrects a placement error of the workpiece W (a step S12). Note that the placement error corresponds to a difference between the target placement position at which the workpiece W should be placed on the stage 32 and an actual placement position at which the workpiece W is actually placed on the stage 32. In order to correct the placement error, firstly, at least one of the measurement apparatuses 211 and 212 measures the state of the workpiece W. Specifically, at least one of the measurement apparatuses 211 and 212 measures the position of the workpiece W on the stage 32. Here, at least one of the measurement apparatuses 211 and 212 may measure the position of at least a part of the workpiece W. The at least a part of the workpiece W may include a feature point of the workpiece W. As a result, the control apparatus 4 is capable of generating information related to the actual placement position based on the workpiece measurement information. Moreover, the target placement position is usually information known to the control apparatus 4. Thus, the control apparatus 4 calculates the placement error based on the information related to the actual placement position included in the workpiece measurement information and information related to the target placement position that is the know information. Then, the control apparatus 4 determines whether or not the placement error is larger than a predetermined allowable threshold value TH1. When it is determined that the placement error is larger than a predetermined allowable threshold value TH1, the control apparatus 4 may perform an operation for prompting the operator to re-place the workpiece W. As a result, the placement error is corrected to be zero or smaller. However, when the processing system SYSa includes a workpiece movement apparatus for moving the workpiece W on the stage 32, the control apparatus 4 may control the workpiece movement apparatus to correct the placement error. However, the processing system SYS may not perform the operation at the step S12.

Then, the measurement apparatus 212 measures the shape of at least a part of the workpiece W (a step S13). Specifically, the measurement apparatus 212 measures the shape of at least a part of the workpiece W included in the measurement field of the measurement apparatus 212. As a result, the control apparatus 4 is capable of obtaining information related to the shape related to the measured result of the shape of at least a part of the workpiece W from the workpiece measurement information. Moreover, as described above, the measurement apparatus 212 is configured to measure, as the state of the workpiece W, not only the shape of the workpiece W but also each of the position (including the attitude) and the size of the workpiece W. Thu, the operation for measuring the shape of at least a part of the workpiece W in the first example embodiment may be regarded to be equivalent to an operation for measuring the state of at least a part of the workpiece W. In this case, the control apparatus 4 may obtain information related to the measured result of the position of at least a part of the workpiece W and information related to the measured result of the size of at least a part of the workpiece W from the workpiece measurement information. Incidentally, in addition to or instead of the measurement apparatus 212, the measurement apparatus 211 may measure the shape of at least a part of the workpiece W at the step S13.

Here, the entire surface of the workpiece W is not necessarily included in the measurement field of the measurement apparatus 212, because the workpiece W is a three-dimensional object. Namely, there is a possibility that the surface of another part of the workpiece W is included in the measurement field of the measurement apparatus 212, although the surface of a part of the workpiece W is included in the measurement field of the measurement apparatus 212. In other words, there is a possibility that the surface of another part of the workpiece W is located in a blind area that is not measurable by the measurement apparatus 212 in a situation where the measurement apparatus 212 measures the shape of the surface of a part of the workpiece W.

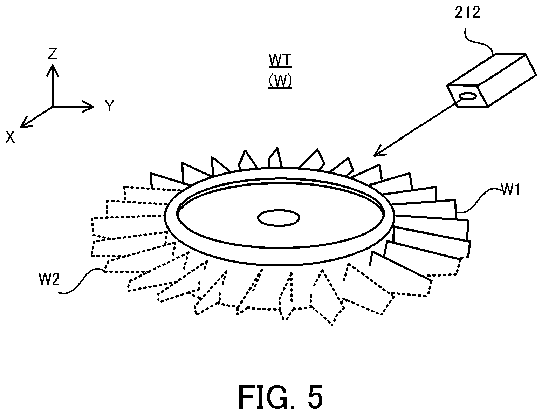

For example, FIG. 5 illustrates the measurement apparatus 212 measuring the shape of the turbine WT that is one example of the workpiece W. Here, when a positional relationship between both of the measurement apparatus 212 and the workpiece W is not changed (namely, is fixed), there is a possibility that a light from a first area W1 (an area indicated by a solid line in FIG. 5) of the workpiece W can reach the measurement apparatus 212 and a light from a second area W2 (an area indicated by a dashed line in FIG. 5) of the workpiece W cannot reach the measurement apparatus 212. Specifically, for example, there is a possibility that the light from the first area W1 that includes a surface part of the surface of the workpiece W facing toward the measurement apparatus 212 can reach the measurement apparatus 212 and the light from the second area W2 that includes a surface part of the surface of the workpiece W facing toward an opposite side of the measurement apparatus 212 cannot reach the measurement apparatus 212. For example, there is a possibility that the light from the first area W1 that includes a surface part of the surface of the workpiece W facing toward a front side viewed from the measurement apparatus 212 can reach the measurement apparatus 212 and the light from the second area W2 that includes a surface part of the surface of the workpiece W facing toward a rear side viewed from the measurement apparatus 212 cannot reach the measurement apparatus 212. For example, there is a possibility that the light from the first area W1 that includes a surface part of the surface of the workpiece W, wherein there is not an obstacle (for example, a part of the workpiece W or an object that is different from the workpiece W) that shields the light between the measurement apparatus 212 and the surface part, can reach the measurement apparatus 212 and the light from the second area W2 that includes a surface part of the surface of the workpiece W, wherein there is the obstacle that shields the light between the measurement apparatus 212 and the surface part, cannot reach the measurement apparatus 212. Note that the first area W1, and the second area, W2 are typically adjacent to each other as illustrated in FIG. 5.

A state where the positional relationship between both of the measurement apparatus 212 and the workpiece W is not changed may be regarded to be equivalent to a state where each of the measurement apparatus 212 and the workpiece W is located at a position that is fixed in the processing system SYSa. The state where the positional relationship between both of the measurement apparatus 212 and the workpiece W is not changed may be regarded to be equivalent to a state where the measurement apparatus 212 is located at a first predetermined position in the processing system SYSa and the workpiece W is located at a second predetermined position in the processing system SYSa. Note that the position in the first example embodiment may include a position in at least one of the X-axis direction, the Y-axis direction, and the Z-axis direction. Alternatively, the position in the first example embodiment may include a position (in other word, an attitude) in at least one of the θX direction, the θY direction, and the θZ direction, in addition to the position in at least one of the X-axis direction, the Y-axis direction, and the Z-axis direction.

A state where the light from the first area W1 can reach the measurement apparatus 212 and the light from the second area W2 cannot reach the measurement apparatus 212 described above corresponds to a state where the first area W1 is included in the measurement field of the measurement apparatus 212 and the second area W2 is not included in the measurement field of the measurement apparatus 212. In other words, the state where the light from the first area W1 can reach the measurement apparatus 212 and the light from the second area W2 cannot reach the measurement apparatus 212 corresponds to a state where the first area W1 is included in the measurement field of the measurement apparatus 212 and the second area W2 is located in the blind area that is not measurable by the measurement apparatus 212.

In this case, the control apparatus 4 is capable of obtaining information related to the shape of the first area W1 from the workpiece measurement information. Alternatively, the control apparatus 4 may obtaining information related to at least one of the position and the size of the first area W1 in addition to or instead of the information related to the shape of the first area W1 from the workpiece measurement information. On the other hand, the control apparatus 4 is not capable of obtaining information related to the shape (furthermore, the position and the size) of the second area W2 from the workpiece measurement information. In this case, the processing system SYSa may change the positional relationship between the measurement apparatus 212 and the workpiece W so that at least a part of the second area W2 is included in the measurement field of the measurement apparatus 212, and then, measure the shape and so on of at least a part of the second area W2 by using the measurement apparatus 212. However, there is a possibility that at least a part of the second area W2 is not included in the measurement field of the measurement apparatus 212, even in this case. Thus, it is necessary for the processing system SYSa to repeat an operation for changing the positional relationship between the measurement apparatus 212 and the workpiece W and then measuring the shape and so on of at least a part of the second area W2 by using the measurement apparatus 212 until the entire surface of the workpiece W is included in the measurement field (namely, the shape and so on of the surface of the entire workpiece W is measured by the measurement apparatus 212). Thus, a relatively long time is required to obtain the information (hereinafter, it is referred to as "workpiece information") related to the state of the workpiece W (namely, the shape, the position, and the size of the workpiece W) on the stage 32. As a result, there is a possibility that a throughput related to the processing of the workpiece W deteriorates. Furthermore, there is a possibility that the workpiece information includes a measurement error caused by measuring the shape and so on of at least a part of the workpiece W while repeating the change of the positional relationship between the measurement apparatus 212 and the workpiece W. Moreover, even when the positional relationship between the measurement apparatus 212 and the workpiece W is changed, the shape of the surface of the entire workpiece W is not measurable in some cases, depending on the shape of the workpiece W.

Thus, in the first example embodiment, the control apparatus 4 uses a method that is different from a method of measuring the shape and so on of entire workpiece W by using the measurement apparatus 212, in order to obtain the information related to the shape and so on of the second area W2. Namely, the control apparatus 4 obtains the information related to the shape and so on of the second area W2 without measuring the shape and so on of entire second area W2 by using the measurement apparatus 212. Specifically, the control apparatus 4 obtains the information related to the shape of the second area W2 from model information that indicates a three-dimensional model (hereinafter, it is referred to as a "workpiece model WM") of at least a part of the workpiece W. The workpiece model WM is a three-dimensional model having a shape that is same as or similar to an ideal or designed shape of the workpiece W. Alternatively, the workpiece model WM may be a three-dimensional model generated based on information related to the shape of the workpiece obtained by measuring the workpiece W by using a predetermined measurement method. The model information may include information indicating at least the shape of the second area W2 (for example, information indicating a three-dimensional model of the second area W2), because the control apparatus 4 obtains the information related to the shape of the second area W2 from the model information. Incidentally, when a fine structure is formed at the workpiece W, the workpiece model WM may be a shape model that does not include the fine structure. Moreover, when the workpiece model WM is used for an inspection after processing, the workpiece model WM may be a shape model to which the fine structure is reflected.

Here, if the model information indicates the three-dimensional model of the workpiece W, the control apparatus 4 may use the model information itself as the workpiece information without using the workpiece measurement information. However, the model information is merely information that indicates the ideal or designed shape of the workpiece W. The model information is merely information that indicates the shape of the workpiece W measured at a certain point in time. Therefore, the model information merely contains the information related to only the shape of the workpiece W. Namely, the model information does not include the information related to the position and size of the workpiece W on the stage 32. In addition, the shape of the workpiece W actually placed on the stage 32 is not necessarily same as the shape of the workpiece W indicated by the model information. Thus, the model information is merely information to which the actual shape of the workpiece W actually placed on the stage 32 is not reflected at all.

Therefore, in the present example embodiment, the control apparatus 4 generates the workpiece information including information related to the state (namely, the shape, the position, and the size) of each of the first area W1 and second area W2 on the stage 32 by using both of the model information and the workpiece measurement information (a step S14). In order to generate the workpiece information by using both of the model information and the workpiece measurement information, the control apparatus 4 firstly obtains the workpiece measurement information from the measurement apparatus 212. Furthermore, the control apparatus 4 obtains the model information. The model information may be recorded in a memory (namely, a recording medium) of the control apparatus 4. The model information may be recorded in any recording medium (for example, a hard disk or a semiconductor memory) that is built in the control apparatus 4 or that is attachable to the control apparatus 4. In this case, the control apparatus 4 may obtain the model information by reading the model information from the recording medium, if necessary. The model information may be recorded in an apparatus external to the control apparatus 4. The model information may be recorded on an apparatus (for example, a server, a database, or any other information processing apparatus) external to the processing system SYSa. In this case, the control apparatus 4 may obtain the model information by downloading workpiece model data from the external apparatus. The model information may also be recorded by a user or an operator of the processing system SYSa on the recording medium and so on.

Then, the control apparatus 4 generates the workpiece information by associating the workpiece measurement information with the model information. Specifically, the control apparatus 4 performs a position-adjustment process that disposes the workpiece model WM indicated by the model information at a position of at least a part of the workpiece W indicated by the workpiece measurement information in a measurement coordinate system that is a three-dimensional coordinate system used to identify the position of the workpiece W measured by the measurement apparatus 212. Namely, the control apparatus 4 performs the position-adjustment process to bring the workpiece model WM closer to the workpiece W indicated by the workpiece measurement information by translating, scaling and / or rotating the workpiece model WM in the measurement coordinate system. After the position-adjustment process is completed, the shape, the position, and the size of the workpiece model WM in the measurement coordinate system are regarded to be substantially equivalent to the shape, the position, and the size of the workpiece W in the measurement coordinate system, respectively. Namely, the shape, the position, and size of the workpiece model WM in the measurement coordinate system is regarded to be substantially equivalent to the shape, the position, and the size of the workpiece W on the stage 32, respectively. Therefore, the control apparatus 4 is capable of generating the workpiece information based on the result of the position-adjustment process.

The information related to the shape, the position, and the size of a part of the workpiece model WM corresponding to the first area W1 is regarded to be equivalent to the information related to the shape, the position, and the size of the first area W1 of the workpiece W included in the workpiece measurement information. On the other hand, the workpiece measurement information is the information obtained by actually measuring the workpiece W. Thus, the workpiece measurement information is expected to be relatively more reliable than the model information. Thus, the control apparatus 4 may generate the workpiece information including the information related to at least one of the shape, the position, and the size of the workpiece W by combining the information related to at least one of the shape, the position, and the size of the first area W1 of the workpiece W included in the workpiece measurement information and the information related to at least one of the shape, the position, and the size of the part of the workpiece model WM corresponding to the second area W2. Specifically, the control apparatus 4 obtains the information related to at least one of the shape, the position, and the size of the first area W1 of the workpiece W from the workpiece measurement information. The control apparatus 4 obtains the information related to at least one of the shape, the position, and the size of the part of the workpiece model WM corresponding to the second area W2 from the result of the position-adjustment process. Then, the control apparatus 4 generates the workpiece information by using the information related to at least one of the shape, the position, and the size of the part of the workpiece model WM corresponding to the second area W2 as the information related to at least one of the shape, the position, and the size of the second area W2 of the workpiece W. Namely, in the first example embodiment, it can be said that the control apparatus 4 generates the workpiece information by using the workpiece measurement information as a general rule, and supplements information lacking in the generation of the workpiece information (namely, information that is necessary for generating the workpiece information but is not included in the workpiece measurement information) with the model information.

Alternatively, the control apparatus 4 may generate (in other words, calculate) the information related to the second area W2 of the workpiece W based on the information related to the state of the first area W1 of the workpiece W obtained from the workpiece measurement information and the information related to the state of the part of the workpiece model WM corresponding to the second area W2, instead of using the information related to the state (namely, the shape, the position and the size) of the part of the workpiece model WM corresponding to the second area W2 as the information related to the state of the second area W2 of the workpiece W as it is. For example, as described above, the first area W1 and the second area W2 are usually adjacent to each other. Thus, it is expected that there is a relatively low possibility that the state of the first area W1 and the state of the second area W2 are significantly different from each other unnaturally at a boundary between the first area W1 and the second area. Thus, when the state of the first area W1 indicated by the workpiece measurement information is significantly different from the state of the second area W2 indicated by the result of the position-adjustment process unnaturally at the boundary between the first area W1 and the second area, there is a possibility that the reliability of either one of the state of the first area W1 indicated by the workpiece measurement information and the state of the second area W2 indicated by the result of the position-adjustment process is low. Here, as described above, the workpiece measurement information is expected to be more reliable than the model information. Thus, the control apparatus 4 may consider the state of the first area W1 indicated by the workpiece measurement information to be a true value and correct the information related to the state of the second area W2 indicated by the result of the position-adjustment process based on the information related to the state of the first area W1 indicated by the workpiece measurement information. In this case, the control apparatus 4 may generate the workpiece information by combining the information related to the state of the first area W1 indicated by the workpiece measurement information and the corrected information related to the state of the second area W2. In this case, the control apparatus 4 may be regarded to generate the information related to the state of the second area W2 that should be included in the workpiece information based on the information related to the state of the first area W1 indicated by the workpiece measurement information and the information related to the state of the second area W2 indicated by the result of the position-adjustment process.

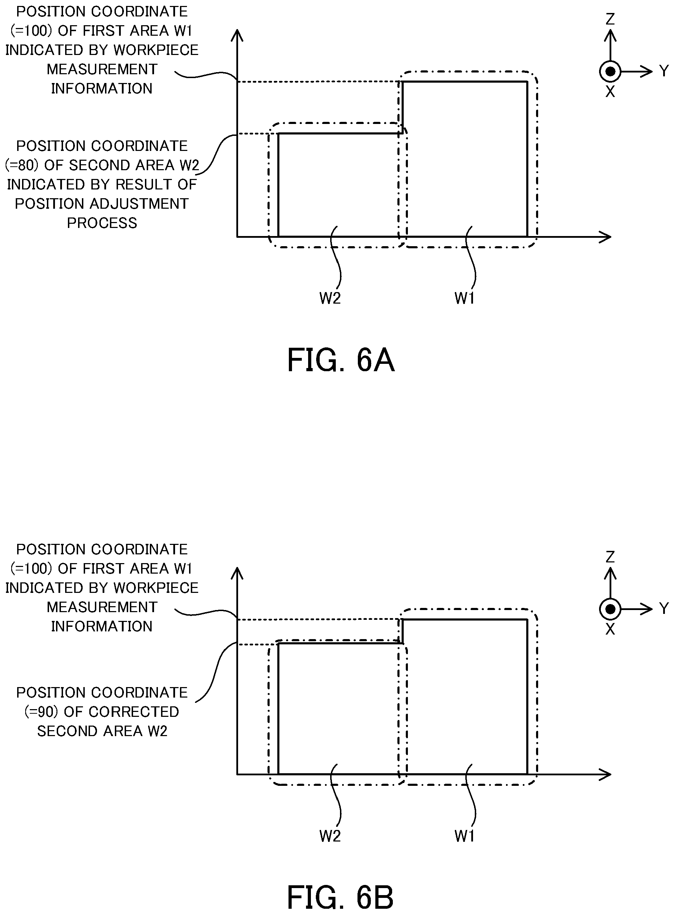

One example of an operation for correcting the information related to the state of the second area W2 will be described with reference to FIG. 6A and FIG. 6B. As illustrated in FIG. 6A, an example in which the workpiece measurement information indicates that the first area W1 is a plane whose position coordinate along the Z-axis direction (namely, a height) is uniformly 100 in the measurement coordinate system and the result of the position-adjustment process indicates that the second area W2 is a plane whose position coordinate along the Z-axis direction is 80 in the measurement coordinate system. In this case, the position coordinates of the surface of the workpiece W along the Z-axis direction suddenly changes from 100 to 80 at the boundary between the first area W1 and the second area W2. In this case, the control apparatus 4 may correct the position coordinate of the second area W2 along the Z-axis direction indicated by the result of the position-adjustment process based on the position coordinate of the first area W1 along the Z-axis direction indicated by the workpiece measurement information. In other words, the control apparatus 4 may generate the position coordinate of the second area W2 along the Z-axis direction that should be included in the workpiece information based on the position coordinate of the first area W1 along the Z-axis direction indicated by the workpiece measurement information and the position coordinate of the second area W2 along the Z-axis direction indicated by the result of the position-adjustment process. For example, as illustrated in FIG. 6B, the control apparatus 4 may generate, as the position coordinate of the second area W2 along the Z-axis direction that should be included in the workpiece information, an average value (= (100 + 80) / 2 = 90) of the position coordinate (= 100) of the first area W1 along the Z-axis direction indicated by the workpiece measurement information and the position coordinate (= 80) of the second area W2 along the Z-axis direction indicated by the result of the position-adjustment process.

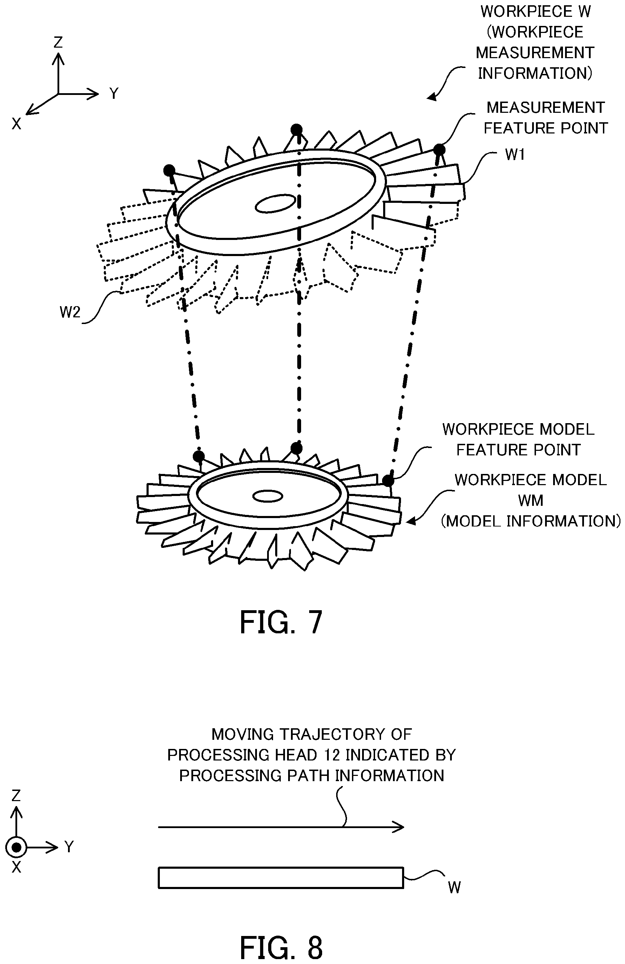

The control apparatus 4 may perform a pattern matching process as a part of the position-adjustment process. One specific example of the position-adjustment process including the pattern matching process will be described here. The control apparatus 4 extracts a measurement feature point that is a feature point of the workpiece W based on the workpiece measurement information. The control apparatus 4 extracts a plurality of (for example, three or more) measurement feature points. The control apparatus 4 extracts the plurality of measurement feature points from the first area W1 of the workpiece W, because the workpiece measurement information includes the information related to the state of the first area W1 but does not include the information related to the state of the second area W2. Notre that the feature point may include at least one of an edge, a vertex, a corner, and an end part of an object, for example. Furthermore, the control apparatus 4 extracts, based on the workpiece model WM, workpiece model feature points that are a plurality of feature points of the workpiece model WM and that correspond to the measurement feature points. Especially, the control apparatus 4 extracts a plurality (for example, three or more) of workpiece model feature points. The control apparatus 4 extracts the plurality of workpiece model feature points from the part of the workpiece model WM corresponding to the first area W1. Then, the control apparatus 4 performs a pattern matching between the workpiece model WM and the workpiece W indicated by the workpiece measurement information based on the workpiece model feature points and the measurement feature points. Specifically, the control apparatus 4 translates, scales and / or rotates the workpiece model WM so that the workpiece model feature points approach the measurement feature points, as illustrated in FIG. 7 that is a conceptual diagram conceptually illustrating the pattern matching between the workpiece model WM and the workpiece W indicated by the workpiece measurement information. The control apparatus 4 translates, scales and / or rotates the workpiece model WM until a displacement between the workpiece model feature points and the measurement feature points is equal to or smaller than a predetermined amount (typically, is minimum). As a result, in the measurement coordinate system, the shape of the part of the workpiece model WM corresponding to the first area W1 matches the shape of the first area W1 of the workpiece W indicated by the workpiece measurement information, the position of the part of the workpiece model WM corresponding to the first area W1 matches the position of the first area W1 of the workpiece W indicated by the workpiece measurement information, and the size of the part of the workpiece model WM that corresponds to the first area W1 matches the size of the first area W1 of the workpiece W indicated by the workpiece measurement information. Thus, as a result of the position-adjustment process, the control apparatus 4 is capable of determining, as the shape, the position and the size of the second area W2 of the workpiece W on the stage 32, the shape, the position, and the size of the part of the workpiece model WM corresponding to the second area W2 in the measurement coordinate system.

The control apparatus 4 may perform the position-adjustment process by using any algorithm for performing the position-adjustment process. An Interative Closest Point (ICP) algorithm for performing the position adjustment of a plurality of point clouds (for example, a point cloud including the workpiece model feature points described above and a point cloud including the measurement feature points) is one example of the algorithm.

Again in FIG. 4, then, the control apparatus 4 generates the processing control information based on the workpiece information generated at the step S14 (a step S15). The processing control information may include information used by the control apparatus 4 to control at least one of the processing unit 1, the measurement unit 2, and the stage unit 3 to process the workpiece W.

The processing control information may include processing path information. The processing path information may include information related to a tool path that is a moving trajectory of an irradiation area of the processing light EL on the workpiece W. As described above, the irradiation area of the processing light EL on the workpiece W moves by the head driving system 13 moving the processing head 12 and / or the stage driving system 33 moving the stage 32. Therefore, the processing path information may be regarded to be equivalent to information related to a moving trajectory of at least one of the processing head 12 and the stage 32 (the workpiece W). Namely, the processing path information may be regarded to be equivalent to information for moving at least one of the processing head 12 and the stage 32 (the workpiece W). When at least one of the processing head 12 and the stage 32 moves, the positional relationship between the processing head 12 and the stage 32 (the workpiece W) changes. Thus, the processing path information may be regarded to be equivalent to information for changing the positional relationship between the processing head 12 and the stage 32 (the workpiece W).

The workpiece information includes the information related to the shape, the position, and the size of the workpiece W. Thus, the processing path information may include information for moving at least one of the processing head 12 and the stage 32 in accordance with at least one of the shape, the position, and the size of the workpiece W. For example, as illustrated in FIG. 8 that illustrates the moving trajectory of the processing head 12 moving relative to the workpiece W based on the processing path information, the processing path information may include information for moving the processing head 12 along a moving trajectory that is parallel to the workpiece W (for example, to the surface of the workpiece W).

Generating the processing control information may include modifying the processing control information that has been already generated. For example, when the shape of the workpiece W expected by the processing control information that has been already generated is different from the shape of the workpiece W indicated by the workpiece information, the control apparatus 4 may modify the processing control information that has been already generated so that appropriate processing control information is generated for the shape of the workpiece W indicated by the workpiece information. For example, when the size of the workpiece W expected by the processing control information that has been already generated is different from the size of the workpiece W indicated by the workpiece information, the control apparatus 4 may modify the processing control information that has been already generated so that appropriate processing control information is generated for the size of the workpiece W indicated by the workpiece information. For example, when the position of the workpiece W expected by the processing control information that has been already generated is different from the position of the workpiece W indicated by the workpiece information, the control apparatus 4 may modify the processing control information that has been already generated so that appropriate processing control information is generated for the position of the workpiece W indicated by the workpiece information.

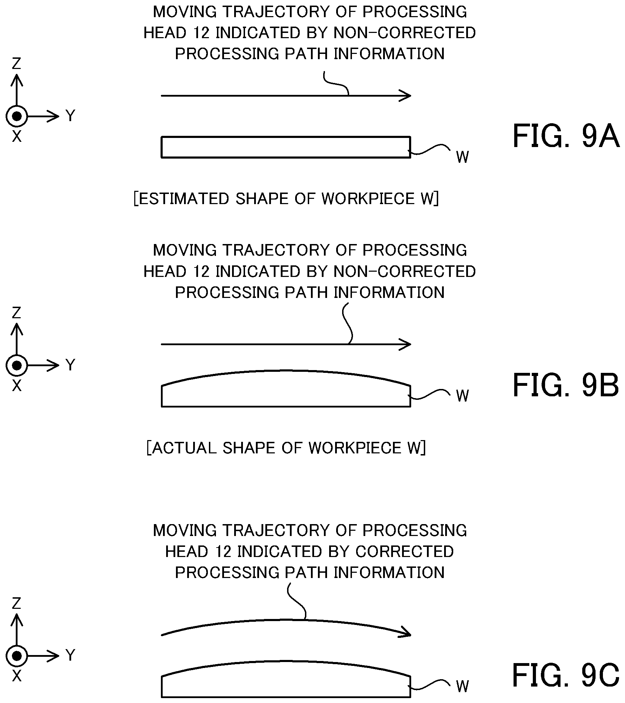

As one example, FIG. 9A illustrates the moving trajectory of the processing head 12 based on the processing path information for relatively moving the processing head 12 along the surface of the workpiece W in order to process the workpiece W having a planar surface. Then, an example in which the workpiece information indicating that the surface of workpiece W is a curved surface (namely, the shape of the surface of workpiece W is different from the expected shape) is generated as illustrated in FIG. 9B in a situation where the processing path information for moving the processing head 12 as illustrated in FIG. 9A has already been generated. In this case, when the processing head 12 moves relative to the workpiece W based on the processing path information that has been already generated, the processing head 12 does not move along a moving trajectory parallel to the surface of the workpiece W, as illustrated in FIG. 9B. Thus, the control apparatus 4 may modify the processing path information that has been already generated to generate the processing path information for relatively moving the processing head 12 along the moving trajectory parallel to the surface of the workpiece W that is the curved surface as illustrated in FIG. 9C.

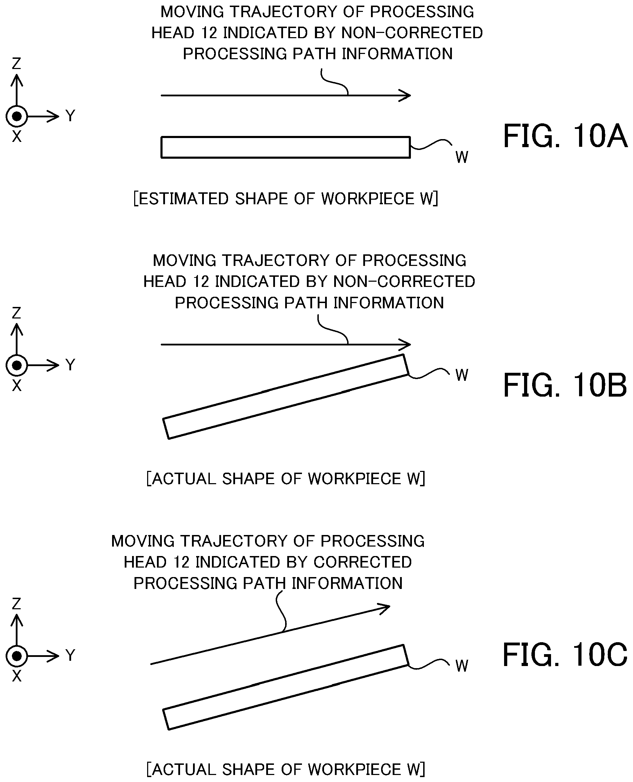

As one example, FIG. 10A illustrates the moving trajectory of the processing head 12 based on the processing path information for relatively moving the processing head 12 along the surface of the workpiece W in order to process the workpiece W the surface of which is parallel to the XY plane. Then, an example in which the workpiece information indicating that the surface of workpiece W is inclined with respect to the XY plane (namely, the shape (the attitude) of the surface of workpiece W is different from the expected shape (the attitude)) is generated as illustrated in FIG. 10B in a situation where the processing path information for moving the processing head 12 as illustrated in FIG. 10A has already been generated. In this case, when the processing head 12 moves relative to the workpiece W based on the processing path information that has been already generated, the processing head 12 does not move along a moving trajectory parallel to the surface of the workpiece W, as illustrated in FIG. 10B. Thus, the control apparatus 4 may modify the processing path information that has been already generated to generate the processing path information for relatively moving the processing head 12 along the moving trajectory parallel to the surface of the workpiece W that is inclined with respect to the XY plane as illustrated in FIG. 10C.

In the above-described description, the control apparatus 4 modifies the processing control information so that the processing head 12 moves relative to the workpiece W along the desired moving trajectory. However, the control apparatus 4 may modify the information related to the position of the workpiece W so that the processing head 12 moves relative to the workpiece W along the desired moving trajectory, in addition to or instead of modifying the processing control information. In short, in a situation where a second object (for example, the processing head 12) moves relative to a reference first object (for example, the workpiece W), the control apparatus 4 may modify at least one of information related to the first object and information related to the second object so that the second object moves relative to the first object along the desired moving trajectory.

The control apparatus 4 may modify (alternatively generate) the processing control information by using a part of the workpiece information. Specifically, the workpiece information is generated based on the workpiece measurement information and the model information, as described above. Here, the workpiece measurement information is the information obtained by actually measuring the first area W1 of the workpiece W. Therefore, it is expected that the information related to the shape (furthermore, the position and the size) of the first area W1 that is included in the workpiece information is more reliable than the information related to the shape (furthermore, the position and the size) of the second area W2 that is included in the workpiece information and that is generated based on the model information. Therefore, the control apparatus 4 may modify (alternatively, generate) the processing control information by using the information related to the state (namely, at least one of the shape, the position, and the size) of the first area W1 of the workpiece information.

Again in FIG. 4, then, the control apparatus 4 controls at least one of the processing unit 1, the measurement unit 2, and the stage unit 3 to process the workpiece W based on the processing control information generated at the step S15 (a step S16). Namely, the processing system SYSa starts processing the workpiece W. Therefore, it can be said that the measurement apparatus 212 measures the shape of the workpiece W before the processing unit 1 starts processing the workpiece W in the first processing operation. It can be said that the control apparatus 4 generates the workpiece information before the processing unit 1 starts processing the workpiece W. Incidentally, since the processing control information is generated based on the workpiece measurement information and the model information, it can be said that the control apparatus 4 controls at least one of the processing unit 1, the measurement unit 2, and the stage unit 3 to process the workpiece W based on the workpiece measurement information and the model information.

Here, as described above, the workpiece information includes the information related to the state of the first area W1 indicated by the workpiece measurement information and the information related to the state of the second area W2 indicated by the result of the position-adjustment process. In this case, the control apparatus 4 may be regarded to control at least one of the processing unit 1, the measurement unit 2, and the stage unit 3 to process the first area W 1 of the workpiece W based on the information related to the state of the first area W1 of the workpiece information. In other words, the control apparatus 4 may be regarded to control at least one of the processing unit 1, the measurement unit 2, and the stage unit 3 to process the first area W1 of the workpiece W based on the workpiece measurement information. Namely, the first area W1 may be regarded to be processed by using the workpiece measurement information. Similarly, the control apparatus 4 may be regarded to control at least one of the processing unit 1, the measurement unit 2, and the stage unit 3 to process the second area W2 of the workpiece W based on the information related to the state of the second area W2 of the workpiece information. In other words, the control apparatus 4 may be regarded to control at least one of the processing unit 1, the measurement unit 2, and the stage unit 3 to process the second area W2 of the workpiece W by using at least a part of the model information (more specifically, by using the result of the position-adjustment process performed by using at least a part of the model information). Namely, the second area W2 may be regarded to be processed by using the model information.

Then, after the processing of the workpiece W is completed, at least one of the measurement apparatuses 211 and 212 measures the processed workpiece W (a step S17). The control apparatus 4 may determine based on the measured result (namely, the workpiece measurement information) by at least one of the measurement apparatuses 211 and 212 whether or not the workpiece W has been properly processed. In other words, the control apparatus 4 may determine whether or not the processing quality of the workpiece W is appropriate. However, the operation at the step S17 may not be performed.

By performing the first processing operation described above, the control apparatus 4 is capable of generating the workpiece information including the information related to the state of a part of the workpiece W on the stage 32 that is not included in the measurement field of the measurement apparatus 212, even when a part of the workpiece W is not included in the measurement field of the measurement apparatus 212. Thus, the processing system SYSa is capable of processing the workpiece W appropriately based on the workpiece information. Especially, the processing system SYSa may not have to repeat the operation for changing the positional relationship between the measurement apparatus 212 and the workpiece W and then measuring the shape and so on of at least a part of the workpiece W by using the measurement apparatus 212 until the shape and so on of entire workpiece W is measured by the measurement apparatus 212. Therefore, the processing system SYSa is capable of processing the workpiece W appropriately without deteriorating the throughput related to the processing of the workpiece W.

In the first processing operation, at least one of the measurement apparatuses 211 and 212 may measure a shape of a processing part of the workpiece W that is processed by the processing unit 1. On the other hand, at least one of the measurement apparatuses 211 and 212 may not measure a shape of a non-processed part of the workpiece W that is not processed by the processing unit 1. In this case, information related to the shape of the processing part may be obtained from the workpiece measurement information, and information related to the shape of the non-processing part may be obtained from the model information.

Moreover, in the first processing operation, a measurement part of the workpiece W whose shape is measured by at least one of the measurement apparatuses 211 and 212 and a non-measurement part of the workpiece W whose shape is not measured by at least one of the measurement apparatuses 211 and 212 may be specified by the user in advance.

### (1-2-1-2) Second Processing Operation

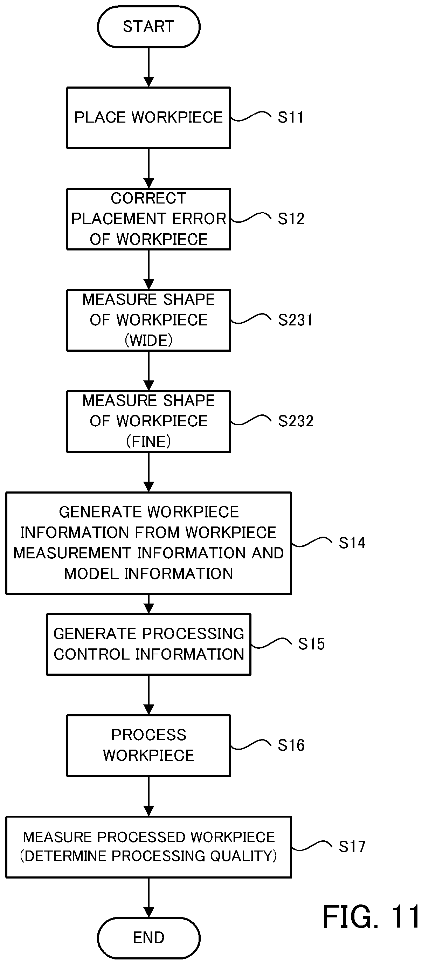

Next, with reference to FIG. 11, the second processing operation will be described. FIG. 11 is a flowchart that illustrates a flow of the second processing operation. Note that a detailed description of an operation that has been already described is omitted by assigning same step number to it.

As illustrated in FIG. 11, the workpiece W is placed (the step S11), and the processing system SYSa corrects the placement error of the workpiece W (the step S12) in the second processing operation, as in the first processing operation.

Then, the measurement apparatus 212 measures the shape of at least a part of the workpiece W (a step S231). Then, the measurement apparatus 211 measures the shape of at least a part of the workpiece W (a step S232). In other words, in the second example embodiment, both of the measurement apparatuses 211 and 212 measure the shape of at least a part of the workpiece W. The operation at each of the steps S231 and S232 may be the same as the operation at the above-described step S13 in FIG. 4.

The measurement apparatus 211 may measure the shape of a measured part (for example, at least a part of the first area W1 described above) of the workpiece W whose shape has been measured by the measurement apparatus 212. For example, when a difference between the shape of the measured part indicated by the workpiece measurement information including the measured result by the measurement apparatus 212 and the shape of the measured part indicated by the model information (hereinafter, it is referred to as a "shape difference") is larger than a predetermined allowable threshold value TH2, there is a possibility that the reliability of either one of the workpiece measurement information and the model information is low. In this case, in the first example embodiment, the workpiece measurement information is regarded to be more reliable than the model information as a general rule. However, in some cases, the workpiece measurement information may be less reliable than the model information. Therefore, in the second example embodiment, when the shape difference related to the measured result by the measurement apparatus 212 is larger than the allowable threshold value TH2, the measurement apparatus 211, which has higher measurement accuracy than the measurement apparatus 212, may measure the shape of the measured part. In this case, the control apparatus 4 may use the workpiece measurement information indicating the measured result by the measurement apparatus 211 in addition to or instead of the workpiece measurement information indicating the measured result by the measurement apparatus 212 to generate the workpiece information. On the other hand, when the shape difference related to the measured result by measurement apparatus 212 is smaller than the allowable threshold value TH2, it is assumed that the workpiece measurement information is highly reliable. When this is the case, measurement apparatus 211 may not measure the shape of the measured part. Incidentally, even when the shape difference related to the measured result by the measurement apparatus 212 is larger than the allowable threshold value TH2, the measurement apparatus 211 may not measure the shape of the measured part.

Note that the shape difference may mean a difference (in effect, a difference in position) between the shape of the measured part (for example, the first area W1) indicated by the workpiece measurement information and the shape of a part corresponding to the measured part of the workpiece model WM indicated by the model information. In order to calculate the shape difference, the control apparatus 4 may perform the position-adjustment process described above and calculate the difference between the shape of the measured part (for example, the first area W1) indicated by the workpiece measurement information and the shape of the part corresponding to the measured part of the workpiece model WM on which the position-adjustment process has been performed.

It can be said that the shape difference is information indicating a manufacturing accuracy (in other words, a manufacturing quality) of the workpiece W. This is because the shape difference is closer to zero as the manufacturing accuracy is higher. Therefore, the control apparatus 4 may store the information related to the shape difference as log information. The log information may be used to evaluate the manufacturing accuracy of the workpiece W.

The allowable threshold value TH2 used in the second processing operation may be set to be a desired value that allows a state in which the shape difference is so large that it cannot be ignored in order to achieve an objective of being able to process the workpiece W properly and a state in which the shape difference is so small that it can be ignored in order to achieve the objective of being able to process the workpiece W properly to be distinguished from each other.

A plurality of allowable threshold values TH2 having different values from each other may be used. For example, a first allowable threshold value TH2 that is compared with the shape difference related to the measured result of the processing part of the workpiece W that is processed by the processing unit 1 and a second allowable threshold value TH2 that is compared with the shape difference related to the measured result of the non-processed part of the workpiece W that is not processed by the processing unit 1 may be used. In this case, the first allowable threshold value TH2 may be a value that is different from the second allowable threshold value TH2. The first allowable threshold value TH2 may be a value that is larger than the second allowable threshold value TH2.

Moreover, a high precision measurement part of the workpiece W whose shape is measured by the measurement apparatus 211 having relatively high measurement accuracy and a low precision measurement part of the workpiece W whose shape is measured by the measurement apparatus 212 having relatively low measurement accuracy may be specified in advance by the user. The shape of the processing part of the workpiece W that is processed by the processing unit 1 may be measured by the measurement apparatus 212 having relatively low measurement accuracy, and the shape of the non-processed part of the workpiece W that is not processed by the processing unit 1 may be measured by the measurement apparatus 212 having relatively low measurement accuracy.

The measurement apparatus 211 may measure the state of a part of workpiece W that is extracted as the measurement feature point used in performing the above-described pattern matching. In this case, the state of the measurement feature point is measured with higher accuracy, and thus, the position adjustment of the workpiece model WM indicated by the model information and the workpiece W indicated by the workpiece measurement information (for example, the pattern matching) is performed with higher accuracy.

As described above, when at least a part of the measurement field of the measurement apparatus 211 is not included in at least a part of the measurement field of the measurement apparatus 212, there is a possibility that a part of the workpiece W that is not included in the measurement field of the measurement apparatus 212 is included in the measurement field of the measurement apparatus 211. Alternatively, when a size of the measurement field of the measurement apparatus 211 is larger than that of the measurement field of the measurement apparatus 212, there is a possibility that a part of the workpiece W that is not included in the measurement field of the measurement apparatus 212 is included in the measurement field of the measurement apparatus 211. For example, when the measurement apparatus 211 is a measurement apparatus the measurement field of which is movable, there is a possibility that a part of the workpiece W that is not included in the measurement field of the measurement apparatus 212 is included in the measurement field of the measurement apparatus 211. In this case, the measurement apparatus 211 may measure a shape of an unmeasured part of the workpiece W whose shape has not been measured by the measurement apparatus 212.

Then, the control apparatus 4 generates the workpiece information by using both of the model information and the workpiece measurement information (the step S14), generates the processing control information based on the workpiece information (the step S15), and control at least one of the processing unit 1, the measurement unit 2, and the stage unit 3 to process the workpiece W based on the processing control information in the second processing operation as in the first processing operation,.

By performing the above-described second processing operation, the processing system SYSa is capable of achieving an effect that is same as the effect achievable by performing the above-described first processing operation.

### (1-2-1-3) Third Processing Operation

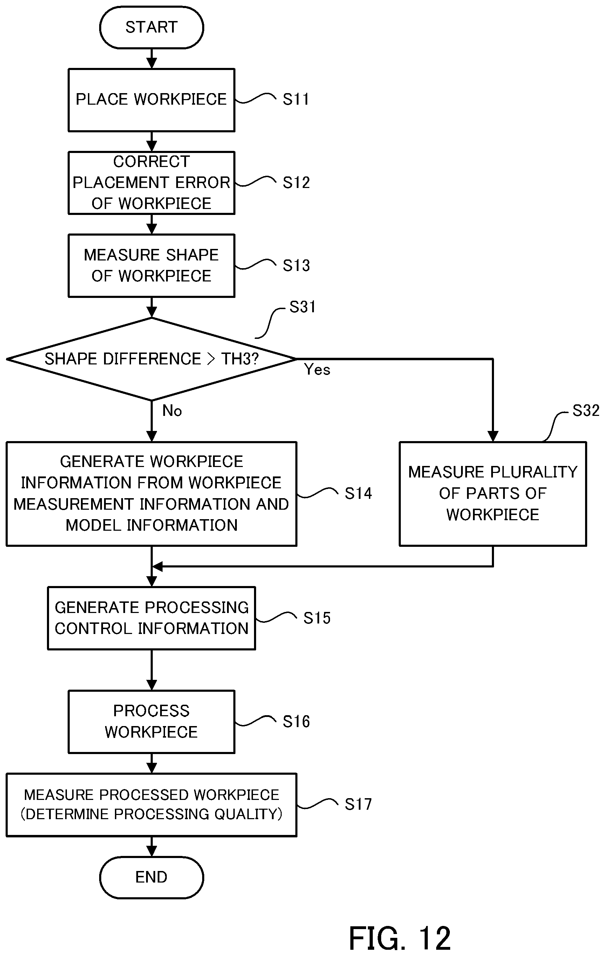

Next, with reference to FIG. 12, the third processing operation will be described. FIG. 12 is a flowchart that illustrates a flow of the third processing operation.

As illustrated in FIG. 12, the workpiece W is placed (the step S11), the processing system SYSa corrects the placement error of the workpiece W (the step S12), and the measurement apparatus 212 measures the shape of at least a part of the workpiece W (the step S13) in the third processing operation, as in the first processing operation.

Then, the control apparatus 4 determines whether or not the difference (namely, the shape difference) between the shape of the workpiece W (specifically, the shape of the first area W1) indicated by the workpiece measurement information and the shape of the workpiece W indicated by the model information is larger than the predetermined allowable threshold value TH3 (a step S31). The allowable threshold value TH3 used in the third processing operation may be the same as or different from the allowable threshold value TH2 used in the second processing operation. The allowable threshold value TH3 may be set to a desired value determined from the same perspective as the allowable threshold value TH2.

As a result of the determination at the step S31, when it is determined that the shape difference is larger than the allowable threshold value TH3 (the step S31: Yes), it is assumed that there is a possibility that either one of the workpiece measurement information and the model information is less reliable. In this case, in the third processing operation, as in the first example embodiment, the workpiece measurement information is regarded to be more reliable than the model information as a general rule. Namely, the control apparatus 4 generates the workpiece information without using the model information that is assumed to be less reliable.

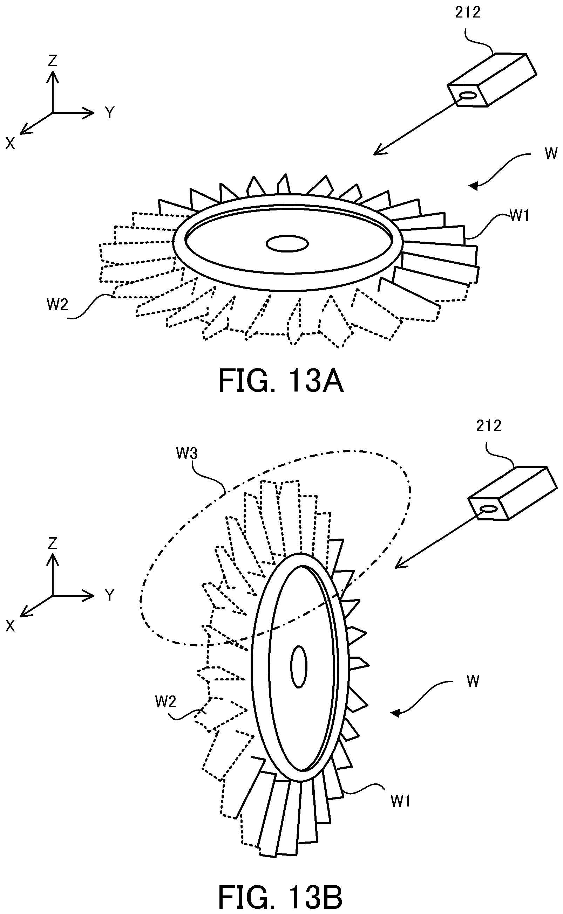

In order to generate the workpiece information without using the model information, the measurement apparatus 212 measures a plurality of parts of the workpiece W in order (a step S32). Specifically, the control apparatus 4 repeat an operation for changing the positional relationship between the measurement apparatus 212 and the workpiece W so that at least a part of the unmeasured part (for example, the second area W2) of the workpiece W whose shape has not yet been measured by the measurement apparatus 212 is newly included in the measurement field of the measurement apparatus 212, and then, measuring the shape and so on of at least a part of the measured part by using the measurement apparatus 212. For example, FIG. 13A illustrates the measurement apparatus 212 measuring the shape of the workpiece W when the positional relationship between the measurement apparatus 212 and the workpiece W is a first positional relationship. When the positional relationship between the measurement apparatus 212 and the workpiece W is the first positional relationship, the first area W1 of the workpiece W is included in the measurement field of the measurement apparatus 212 and the second area W2 of the workpiece W is not included in the measurement field of the measurement apparatus 212. FIG. 13B illustrates the measurement apparatus 212 measuring the shape of the workpiece W after the positional relationship between the measurement apparatus 212 and the workpiece W is changed from the first positional relationship to a second positional relationship. As illustrated in FIG. 13A and FIG. 13B, after the positional relationship between the measurement apparatus 212 and the workpiece W is changed, at least a part of the second area W2 of the workpiece W that was not included in the measurement field of the measurement apparatus 212 is newly included in the measurement field of the measurement apparatus 212. For example, a third area W3 that is a part of the second area W2 of the workpiece W and that was not included in the measurement field of the measurement apparatus 212 before the positional relationship between the measurement apparatus 212 and the workpiece W is changed. As a result, the measurement apparatus 212 is capable of measuring the shape of the third area W3.

The control apparatus 4 repeats an operation for changing the positional relationship between the measurement apparatus 212 and the workpiece W and then measuring the shape and so on of at least a part of the workpiece W by using the measurement apparatus 212 until entire workpiece W is included in the measurement field of the measurement apparatus 212 (namely, the shape and so on of entire workpiece W is measured by the measurement apparatus 212). However, the control apparatus 4 may repeat the operation for changing the positional relationship between the measurement apparatus 212 and the workpiece W and then measuring the shape and so on of at least a part of the workpiece W by using the measurement apparatus 212 until a certain percentage of the workpiece W is included in the measurement field of the measurement apparatus 212 (namely, the shape and so on of a certain percentage of the workpiece W is measured by the measurement apparatus 212).

By repeating the above-described operation, the control apparatus 4 is capable of obtaining the workpiece measurement information indicating the measured results of the plurality of parts of the workpiece W. The control apparatus 4 uses the obtained workpiece measurement information as the workpiece information.

On the other hand, as a result of the determination at the step S31, when it is determined that the shape difference is not larger than the allowable threshold value TH3, it is assumed that both of the workpiece measurement information and the model information are highly reliable. Therefore, in this case, the control apparatus 4 generates the workpiece information by using both of the model information and the workpiece measurement apparatus in the third processing operation, as in the first processing operation, (the step S 14).

Then, the control apparatus 4 generates the processing control information based on the workpiece information (the step S15), and controls at least one of the processing unit 1, measurement unit 2, and stage unit 3 to process the workpiece W based on the processing control information (the step S16) in the third processing operation, as in the first processing operation.

By performing the above-described third processing operation, the processing system SYSa is capable of achieving an effect that is same as the effect achievable by performing the above-described first processing operation. Furthermore, in the third processing operation, the processing system SYSa repeats the operation for changing the positional relationship between the measurement apparatus 212 and the workpiece W so that at least a part of the unmeasured part of the workpiece W is included in the measurement field of the measurement apparatus 212, and then measuring the shape and so on of at least a part of the unmeasured part by using the measurement apparatus 212 in a situation where the reliability of the model information is assumed to be low. As a result, the processing system SYSa is capable of preventing deterioration of the processing quality of the workpiece W caused by processing the workpiece W based on the model information having low reliability. Namely, in the third processing operation, the processing system SYSa prioritizes preventing the deterioration of the processing quality of the workpiece W caused by the unreliable model information over preventing the deterioration of the throughput related to the processing of the workpiece W in the processing in the situation where the reliability of the model information is assumed to be low. As a result, the processing system SYSa is capable of processing the workpiece W with high accuracy. On the other hand, the processing system SYSa prioritizes preventing the deterioration of the throughput related to the processing of the workpiece W in a situation where the reliability of the model information is assumed to be not low, because there is a low possibility that the processing quality of the workpiece W is deteriorated by the model information having the low reliability. As a result, the processing system SYSa is capable of processing the workpiece W with high accuracy while preventing the deterioration of the throughput related to the processing of the workpiece W.

Incidentally, in the above-described description, when the shape difference is larger than the allowable threshold value TH3, the measurement apparatus 212 measures the plurality of parts of the workpiece W in order, and the control apparatus 4 uses the workpiece measurement information indicating the measured results of the plurality of parts of the workpiece W as the workpiece information. Here, the workpiece information corresponding to the workpiece measurement information indicating the measured results of the plurality of parts (typically, the whole) of the workpiece W should be more reliable than the workpiece information generated based on the model information and the workpiece measurement information indicating the measured result of a part of the workpiece W (for example, only the first area W1). Namely, the workpiece information corresponding to the workpiece measurement information indicating the measured results of the plurality of parts of the workpiece W should indicate the state of the workpiece W on the stage 32 with higher accuracy than the workpiece information generated based on the model information and the workpiece measurement information indicating the measurement result of a part of the workpiece W. Therefore, when priority is given to processing the workpiece W with high accuracy, the measurement apparatus 212 may measure a plurality of parts of the workpiece W in order, and the control apparatus 4 may use the workpiece measurement information indicating the measured results of the plurality of parts of the workpiece W as the workpiece information. On the other hand, when the measurement apparatus 212 measures the plurality of parts of the workpiece W in order as described above, the throughput related to the processing of the workpiece W deteriorates. Therefore, when the priority is to prevent the deterioration of the throughput related to the processing of the workpiece W, the control apparatus 4 may generate the workpiece information by using both of the model information and the workpiece measurement information. Namely, regardless of a largeness relationship between the shape difference and the allowable threshold value TH3, an operation mode of the processing system SYSa may be switched between a high-accuracy processing mode in which the workpiece W is processed with high accuracy by using the workpiece measurement information indicating the measured results of the plurality of parts of the workpiece W as the workpiece information and a throughput improvement mode in which the priority is given to the throughput of the processing of the workpiece W by generating the workpiece information by using both of the model information and the workpiece measurement information.

Moreover, in the above-described description, the operation for measuring the shape of at least a part of the workpiece W by using the measurement apparatus 212 is repeated until the shape of entire workpiece W is measured. However, the operation for measuring the shape of at least a part of the workpiece W by using the measurement apparatus 212 may be repeated until the shape of the processing part of the workpiece W that is processed (namely, that is expected to be processed) by the processing unit 1 is measured. Namely, the shape of the non-processing part of the workpiece W that is not processed (namely, that is not expected to be processed) by the processing unit 1 may not be measured.

### (1-2-1-4) Fourth Processing Operation

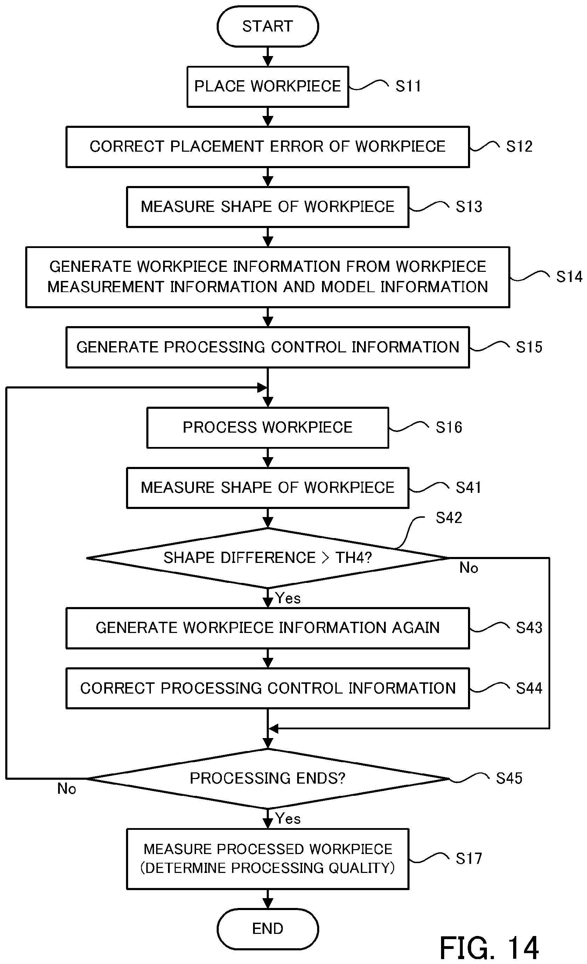

Next, with reference to FIG. 14, the fourth processing operation will be described. FIG. 14 is a flowchart that illustrates a flow of the fourth processing operation.

As illustrated in FIG. 14, the workpiece W is placed (the step S 11), the processing system SYSa corrects the placement error of the workpiece W (the step S12), the measurement apparatus 212 measures the shape of at least a part of the workpiece W (the step S13), the control apparatus 4 generates the workpiece information by using both of the model information and the workpiece measurement information (the step S14), the control apparatus 4 generates the processing control information based on the workpiece information (the step S15), and the control apparatus 4 controls at least one of the processing unit 1, the measurement unit 2, and the stage unit 3 to process the workpiece W based on the processing control information (the step S16) in the fourth processing operation, as in the first processing operation.

After the processing unit 1 starts processing the workpiece W, the measurement apparatus 212 measures the shape of at least a part of the workpiece W (a step S41). Namely, in the fourth processing operation, the measurement apparatus 212 measures the shape of at least part of the workpiece W in at least part of a processing period after the processing unit 1 starts processing the workpiece W (the step S41). Note that the operation at the step S41 may be the same as the operation at the step S13, and thus, a detailed description thereof is omitted. Incidentally, at the step S41, the measurement apparatus 211 may measure the shape of at least part of the workpiece W instead of the measurement apparatus 212, as with the step S13.

After the processing unit 1 starts processing the workpiece W, the positional relationship between the workpiece W and the measurement apparatus 212 may change. The measurement apparatus 212 may measure the shape of at least a part of the workpiece W when the positional relationship between the workpiece W and the measurement apparatus 212 changes after the processing unit 1 starts processing the workpiece W. In this case, as described by using FIG. 13A and FIG. 13B described above, at least a part of the second area W2 of the workpiece W (for example, the third area W3), which was not included in the measurement field of the measurement apparatus 212 before the processing unit 1 started processing the workpiece W, is newly included in the field of the measurement apparatus 212 after the processing unit 1 starts processing the workpiece W. As a result, the measurement apparatus 212 is capable of measuring the shape of at least a part of the second area W2 (for example, the third area W3) of the workpiece W, whose shape was not measurable before the processing unit 1 started processing the workpiece W, after the processing unit 1 starts processing the workpiece W. Namely, the control apparatus 4 is capable of obtaining the workpiece measurement information indicating the measured result of the shape of at least a part of the second area W2 (for example, the third area W3) of the workpiece W, which could not be obtained before the processing unit 1 started processing the workpiece W, after the processing unit 1 starts processing the workpiece W. The following description of the fourth processing operation describes an example in which the measurement apparatus 212 measures the shape of the third area W3 in the step S41 and the control apparatus 4 obtains the workpiece measurement information indicating the measured result of the shape of the third area W3.

Then, the control apparatus 4 determines whether or not a difference between the shape of the workpiece W (namely, the shape of the third area W3) indicated by the workpiece measurement information obtained at the step S41 and the shape of the workpiece W (namely, the shape of the third area W3) indicated by the model information (namely, the shape difference) is larger than a predetermined allowable threshold value TH4 (a step S42). Note that the allowable threshold value TH4 used in the fourth processing operation may be the same as or different from at least one of the allowable threshold value TH2 used in the second processing operation and the allowable threshold value TH3 used in the third processing operation. The allowable threshold value TH4 may be set to be a desired value determined from the same perspective as at least one of the allowable threshold values TH2 and TH3.

As a result of the determination at the step S42, when it is determined that the shape difference is larger than the allowable threshold value TH4 (the step S42: Yes), it is assumed that the shape of the third area W3 indicated by the model information is not accurate. Thus, it is assumed that the workpiece information generated before the processing unit 1 starts processing the workpiece W does not accurately indicate the state of the third area W3. Therefore, in this case, the control apparatus 4 regenerates the workpiece information based on the workpiece measurement information indicating the measured result of the shape of the third area W3 (a step S43). Specifically, the control apparatus 4 generates the workpiece information based on the model information and the workpiece measurement information indicating the measured results of the shapes of the first area W1 and the third area W3, by using a method that is the same as a method for generating the processing control information based on the model information and the workpiece measurement information indicating the measured result of the shape of the first area W1. Namely, the control apparatus 4 may regenerate the workpiece information including the information related to the shape, the position, and the size of the workpiece W by combining the information related to the shape, the position, and the size of each of the first area W1 and the third area W3 of the workpiece W included in the workpiece measurement information and the information related to the shape, the position, and the size of a part of the workpiece model WM excluding the first area W1 and the third area W3.

The, the control apparatus 4 modifies the processing control information based on the workpiece information regenerated at the step S43 (a step S44). Note that the control apparatus 4 may directly modify the processing control information based on the workpiece measurement information indicating the measured result of the shape of the third area W3 without regenerating the workpiece information at the step S43.

On the other hand, as a result of the determination at the step S42, when it is determined that the shape difference is smaller than the allowable threshold value TH4 (the step S42: No), it is assumed that the shape of the third area W3 indicated by the model information is accurate. Therefore, it is assumed that the workpiece information generated before the processing unit 1 starts processing the workpiece W accurately indicates the state of the third area W3. In this case, the control apparatus 4 may not regenerate the workpiece information.

Thereafter, the processing system SYSa repeats the operations at the step S16 and the step S41 to the step S44 until the processing of the workpiece W is completed (a step S45). After the processing of the workpiece W is completed, at least one of the measurement apparatuses 211 and 212 may measure the processed workpiece W (the step S17).

By performing the above-described fourth processing operation, the processing system SYSa is capable of achieving an effect that is same as the effect achievable by performing the above-described first processing operation. Furthermore, in the fourth processing operation, when the positional relationship between the workpiece W and the measurement apparatus 212 changes after the processing unit 1 starts processing the workpiece W, the processing system SYSa is capable of measuring, by using the measurement apparatus 212, the shape of the third area W3 of the workpiece W that could not be measured before the processing unit 1 started processing the workpiece W. Thus, in the fourth processing operation, a ratio of the unmeasured part of the workpiece W whose shape has never been measured by the measurement apparatus 212 to entire workpiece W gradually becomes smaller. As a result, a ratio of information complemented based on the model information (namely, information related to the state of the unmeasured part) to the workpiece information gradually becomes smaller. Namely, the state of the workpiece W indicated by the workpiece information gradually becomes more accurate. Thus, the processing system SYSa is capable of processing the workpiece W with higher accuracy, compared to a case where the workpiece information is not regenerated after the processing unit 1 starts processing the workpiece W.

### (1-2-1-5) Fifth Processing Operation

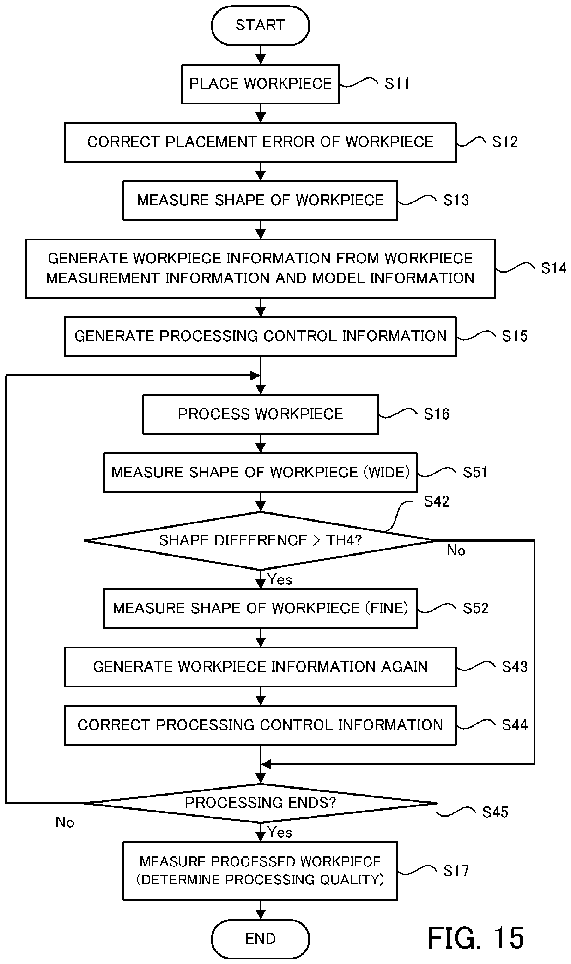

Next, with reference to FIG. 15, the fifth processing operation will be described. FIG. 15 is a flowchart that illustrates a flow of the fifth processing operation.

As illustrated in FIG. 15, the workpiece W is placed (the step S11), the processing system SYSa corrects the placement error of the workpiece W (the step S12), the measurement apparatus 212 measures the shape of at least a part of the workpiece W (the step S13), the control apparatus 4 generates the workpiece information by using both of the model information and the workpiece measurement information (the step S14), the control apparatus 4 generates the processing control information based on the workpiece information (the step S15), and the control apparatus 4 controls at least one of the processing unit 1, the measurement unit 2, and the stage unit 3 to process the workpiece W based on the processing control information (the step S16) in the fifth processing operation, as in the first processing operation.

After the processing unit 1 starts processing the workpiece W, the measurement apparatus 212 measures the shape of at least a part of the workpiece W (a step S51). Namely, the measurement apparatus 212 measures the shape of at least part of the workpiece W in at least a part of the processing period after the processing unit 1 starts processing the workpiece W in the fifth processing operation, as in the fourth processing operation (the step S51). Note that the operation at the step S53 may be the same as the operation at the step S13, and thus, a detailed description thereof is omitted.

Then, the control apparatus 4 determines whether or not the shape difference is larger than the allowable threshold value TH4 in the fifth processing operation, as in the fourth processing operation (the step S42).

As a result of the determination at the step S42, when it is determined that the shape difference is larger than the allowable threshold value TH4 (the step S42: Yes), the control apparatus 4 regenerates the workpiece information based on the workpiece measurement information obtained after the processing unit 1 starts processing the workpiece W (namely, the workpiece measurement information indicating the measured result of the shape of the third area W3) in the fifth processing operation, as in the fourth processing operation (the step S43). However, in the fifth processing operation, the measurement apparatus 211 that has higher measurement accuracy than the measurement apparatus 212 measures the shape of the third area W3 (namely, the part of the workpiece W whose shape could not be measured before the processing unit 1 started processing the workpiece W) (a step S52). Then, the control apparatus 4 regenerates the workpiece information based on the workpiece measurement information obtained by the measurement apparatus 211 measuring the third area W3 (the step S43).

Then, the control apparatus 4 modifies the processing control information based on the workpiece information regenerated at the step S43 in the fifth processing operation, as in the fourth processing operation (the step S44). Moreover, as a result of the determination at the step S42, when it is determined that the shape difference is smaller than the allowable threshold value TH4 (the step S42: No), the measurement apparatus 211 may not measure the third area W3, and the control apparatus 4 may not regenerate the workpiece information.

By performing the above-described fifth processing operation, the processing system SYSa is capable of achieving an effect that is same as the effect achievable by performing the above-described fifth processing operation. Furthermore, in the fifth processing operation, the control apparatus 4 regenerates the workpiece information based on the workpiece measurement information obtained by the measurement apparatus 211, which has higher measurement accuracy than the measurement apparatus 212, measuring the third area W3. Thus, there is a higher possibility that the workpiece information regenerated in the fifth processing operation indicates the state of the workpiece W with higher accuracy than the workpiece information regenerated based on the workpiece measurement information obtained by the measurement apparatus 212 measuring the third area W3. Thus, the processing system SYSa is capable of processing the workpiece W with high accuracy.

### (1-2-1-6) Sixth Processing Operation

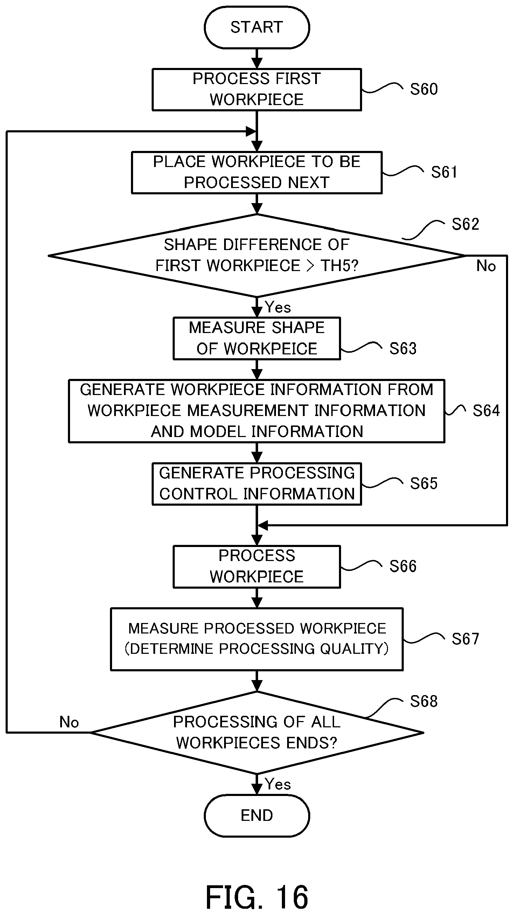

Next, with reference to FIG. 16, the sixth processing operation will be described. FIG. 16 is a flowchart that illustrates a flow of the sixth processing operation.

The sixth processing operation is an operation for processing a plurality of workpieces W having the same shape and size. In the below-described description, the sixth processing operation, performed to process N (N is a constant value representing an integer that is equal to or larger than 2) workpieces W#1 to W#N having the same shape and size will be described.

As illustrated in FIG. 16, the processing system SYSa processes, by performing at least one of the above-described first to fifth processing operations, the workpiece W#1 that is to be processed firstly (a step S60). Incidentally, When the workpiece W #1 is processed by performing the third processing operation, the processing system SYSa may measures the plurality of parts of the workpiece W in order by using the measurement apparatus 212 (the step S32 in FIG. 12) without performing the determining operation at the step S31 in FIG. 12.

Then, after the processing of the workpiece W is completed, the workpiece W#2 that is to be processed next is placed on the stage 32 (a step S61). Note that the operation at the step S61 may be the same as the operation at the above-described step S11 in FIG. 4, and thus, a detailed description thereof is omitted.

Then, the control apparatus 4 determines whether or not a difference between the shape of the workpiece W#1 indicated by the workpiece measurement apparatus obtained for processing the workpiece W#1 and the shape of the workpiece W#1 indicated by the model information (namely, the shape difference) is larger than a predetermined allowable threshold value TH5 (a step S62). Note that the allowable threshold value TH5 used in the sixth processing operation may be the same as or different from at least one of the allowable threshold value TH2 used in the second processing operation, the allowable threshold value TH3 used in the third processing operation, and the allowable threshold value TH4 used in the fourth processing operation. The allowable threshold value TH5 may be set to be a desired value determined from the same perspective as at least one of the allowable threshold values TH2 to TH4.

As a result of the determination at the step S62, when it is determined that the shape difference is smaller than the allowable threshold value TH5 (the step S62: No), it is assumed that an actual shape of the workpiece W#1 is substantially the same as an ideal or designed shape of the workpiece W#1 indicated by the model information. Namely, it is assumed that the workpiece W#1 is manufactured with high accuracy so that the shape of the workpiece W#1 is the ideal or designed shape. In this case, it is assumed that the workpieces W#2 to W#N are also manufactured with high accuracy so that the shape of each of the workpieces W#2 to W#N is the ideal or designed shapes. Therefore, the workpiece information generated for processing workpiece W#1 may be regarded to indicate not only the state (the shape and so on) of the workpiece W#1 but also the state (the shape and so on) of each of the workpieces W#2 to W#N. As a result, the processing control information generated based on the workpiece information generated for processing the workpiece W#1 is substantially usable not only as information for processing the workpiece W#1 but also as information for processing each of the workpieces W#2 to W#N. Specifically, for example, the processing path information generated for processing the workpiece W#1 is substantially usable not only as information indicating the moving trajectory of the processing head 12 relative to the workpiece W#1, but also as information indicating the moving trajectory of the processing head 12 relative to each of the workpieces W#2 to W#N. Thus, in this case, the control apparatus 4 uses the processing control information generated for processing the workpiece W#1 as the processing control information for processing each of the workpieces W#2 to W#N instead of newly generating the processing control information for processing each of the workpieces W#2 to W#N. namely, the processing system SYSa may not perform the operation at steps S63 to S65 described below to generate the processing control information for processing each of the workpieces W#2 to W#N.

On the other hand, as a result of the determination at the step S62, when it is determined that the shape difference is larger than the allowable threshold value TH5 (the step S62: Yes), it is assumed that the actual shape of workpiece W#1 is different from the ideal or designed shape of the workpiece W indicated by the model information. Namely, it is assumed that the shape of the workpiece W#1 is not the ideal or designed shape because of the low manufacturing accuracy of the workpiece W#1. In this case, there is a possibility that the manufacturing accuracy of at least one of the workpieces W#2 to W#N is also low. Thus, as described above, there is a possibility that the workpiece information generated for processing the workpiece W#1 does not indicate the state (the shape and so on) of each of workpieces W#2 to W#N. As a result, there is a possibility that the processing control information generated based on the workpiece information generated for processing the workpiece W#1 is not usable as the information for processing each of the workpieces W#2 to W#N. Thus, in this case, the control apparatus 4 newly generates the processing control information for processing each of the workpieces W#2 to W#N. Specifically, the measurement apparatus 212 measures the shape of the workpiece W#2 (a step S63), the control apparatus 4 generates the workpiece information by using both of the workpiece measurement information and the model information (a step S64), and the control apparatus 4 generates the processing control information based on the workpiece information (a step S65). Note that the operations at the steps S63 to S65 may be the same as the operations at the above-described step S13 to S15 in FIG. 4, respectively, and thus, a detailed description thereof is omitted.

At the step S63, the measurement apparatus 212 may selectively measure the shape of a part of the workpiece W#2 where the shape difference is relatively large. For example, the control apparatus 4 may determine, based on the workpiece measurement information obtained for processing the workpiece W#1 and the model information, a focus part of the workpiece W#2 where a difference relative to the shape of the workpiece W indicated by the model information is relatively large. The focus part may include a part corresponding to a part of workpiece W#1 where a difference relative to the shape of workpiece W indicated by the model information is relatively large. Then, the measurement apparatus 212 may selectively measure the shape of the focus part.

Then, the control apparatus 4 controls at least one of the processing unit 1, the measurement unit 2, and the stage unit 3 to process the workpiece W#2 based on the processing control information (a step S66). After the processing of the workpiece W #2 is completed, at least one of the measurement apparatuses 211 and 212 may measure the processed workpiece W#2 (a step S67). Note that the operations at the steps S66 to S67 may be the same as the operation at the above-described steps S16 to S17 in FIG. 4, and thus, a detailed description thereof is omitted.

Thereafter, the operations at the step S61 to step S67 are repeated (a step S68) until the processing of the plurality of workpieces W (namely, N workpieces W#1 to W#N) is completed.

By performing the above-described sixth processing operation, the processing system SYSa is capable of achieving an effect that is same as the effect achievable by performing the above-described first processing operation. Furthermore, in the sixth processing operation, the control apparatus 4 may not generate the plurality of workpiece information corresponding to the plurality of workpieces W, respectively. The control apparatus 4 may not generate the plurality of processing control information corresponding to the plurality of workpieces W, respectively. Thus, the throughput related to the processing of the plurality of workpieces W improves, compared to the case where the plurality of workpiece information corresponding to the plurality of workpieces W, respectively, are generated (furthermore, the plurality of processing control information corresponding to the plurality of workpieces W, respectively, are generated).

### (1-2-2) Measurement Operation

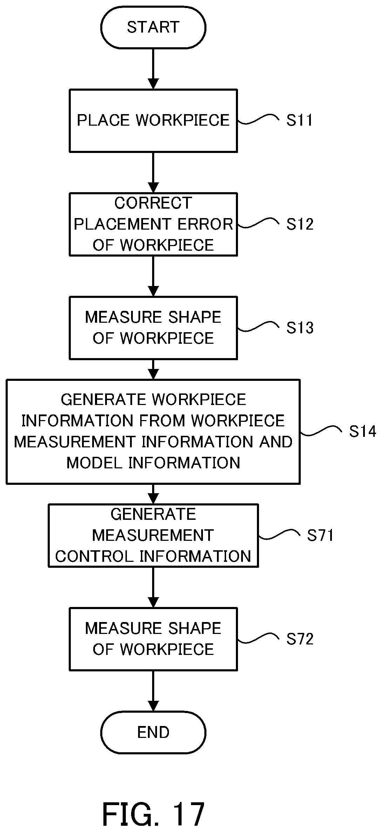

Next, with reference to FIG. 17, the measurement operation will be described. FIG. 17 is a flowchart that illustrates a flow of the measurement operation.

As illustrated in FIG. 17, the workpiece W is placed (the step S 11), the processing system SYSa corrects the placement error of the workpiece W (the step S12), the measurement apparatus 212 measures the shape of at least a part of the workpiece W (the step S13), and the control apparatus 4 generates the workpiece information by using both of the model information and the workpiece measurement information (the step S14) in the measurement operation, as in the processing operation.

Then, the control apparatus 4 generates the measurement control information (a step S71). The measurement control information may include information used by the control apparatus 4 to control at least one of the processing unit 1, measurement unit 2, and stage unit 3 to measure the workpiece W.

The measurement control information may include measurement path information. The measurement path information may be regarded to be equivalent to information related to a moving trajectory of at least one of the measurement head 21 and the stage 32 (the workpiece W). Namely, the measurement path information may be regarded to be equivalent to information for moving at least one of the measurement head 21 and the stage 32 (the workpiece W). When at least one of the measurement head 21 and the stage 32 moves, a positional relationship between the measurement head 21 and the stage 32 (the workpiece W) changes. Thus, the measurement path information may be regarded to be equivalent to information for changing the positional relationship between the measurement head 21 and the stage 32 (the workpiece W).

The measurement path information is different from the processing path information, which includes information for controlling the movement or the position of the processing head 12, in that the measurement path information includes information for controlling the movement or the position of the measurement head 21. Other feature of the measurement path information may be the same as other feature of the processing path information. Therefore, the control apparatus 4 may generate the measurement control information in the same method as a method for generating the processing path information (furthermore, the processing control information). For example, the control apparatus 4 may generate the measurement control information that includes information for moving at least one of the measurement head 21 and the stage 32 based on the state (the shape and so on) of the workpiece W. For example, when the state of the workpiece W expected by the already generated measurement control information is different from the state of the workpiece W indicated by the workpiece information, the control apparatus 4 may modify the already generated measurement control information so that appropriate measurement control information is generated for the state of the workpiece W indicated by the workpiece information.

As described above, the workpiece information includes the information related to the state of the first area W1 that has been measured by the measurement apparatus 212 and the information related to the state of the second area W2 that has not been measured by the measurement apparatus 212. In this case, the control apparatus 4 may generate the measurement control information based on the workpiece information (especially, the information related to the state of the second area W2) so that at least one of the measurement apparatuses 211 and 212 measures at least a part of the shape of the second area W2 that has not been measured by the measurement apparatus 212. For example, the control apparatus 4 may generate the measurement control information so that at least one of the measurement apparatuses 211 and 212 measures the shape of the third area W3 (see FIG. 13B) that is at least a part of the second area W2 that has not been measured by the measurement apparatus 212.

Then, the control apparatus 4 controls at least one of the processing unit 1, the measurement unit 2, and the stage unit 3 so that at least one of the measurement apparatuses 211 and 212 measures the shape of the workpiece W based on the measurement control information generated at the step S71. For example, the control apparatus 4 may control, based on the measurement control information, at least one of the processing unit 1, the measurement unit 2, and the stage unit 3 so that at least one of the measurement apparatuses 211 and 212 measures the shape of the third area W3 (see FIG. 13B) that is at least a part of the second area W2 that has not been measured by the measurement apparatus 212. Incidentally, when the measurement apparatus 212 measures the shape of the first area W1 of the workpiece W at the step S 13, there is a possibility that both of the measurement apparatuses 211 and 212 is not capable of measuring the shape of the third area W3 unless the positional relationship between the measurement head 21 and the workpiece W is changed. Thus, in this case, the control apparatus 4 may control, based on the measurement control information, at least one of the head driving system 22 and the stage driving system 33 to change the positional relationship between the measurement head 21 and the workpiece W until the third area W3 is included in the measurement field of at least one of the measurement apparatuses 211 and 212. After the positional relationship between the measurement head 21 and the workpiece W is changed until the third area W3 is included in the measurement field of at least one of the measurement apparatuses 211 and 212, at least one of the measurement apparatuses 211 and 212 measures the shape of the third area W3.

The workpiece measurement information indicating the measured results at the steps S13 and S72 may be used to generate the processing control information. In this case, the control apparatus 4 may generate the processing control information based on the workpiece measurement information indicating the measured results at the steps S13 and S72 instead of generating the processing control information by performing a part of the first to sixth processing operations described above.

By performing the above-described measurement operation, even when a part of the workpiece W is not included in the measurement field of the measurement apparatus 212, the control apparatus 4 is capable of generating the workpiece information including the information related to the state on the stage 32 of a part of the workpiece W that is not included in the measurement field of the measurement apparatus 212. Thus, the processing system SYSa is capable of properly measuring the workpiece W based on the workpiece information.

A situation in which processing control information is generated for processing an inside of an inner wall defining a hole formed in the workpiece W is one example of a situation in which the measurement operation is performed. In this case, firstly, at least one of the measurement apparatuses 211 and 212 measures the shape of at least a part of the workpiece W, and the control apparatus 4 generates the workpiece information by using both of the workpiece measurement information and the model information. Then, the control apparatus 4 generates, by using uses the generated workpiece information, the measurement control information that is used by the control apparatus 4 to control at least one of the processing unit 1, the measurement unit 2, and the stage unit 3 to measure the shape of the hole formed in the workpiece W (for example, to measure the shape of the inner wall surrounding the hole) . Then, the control apparatus 4 then controls, based on the measurement control information, at least one of the processing unit 1, the measurement unit 2, and the stage unit 3 so that at least one of the measurement apparatuses 211 and 212 measures the shape of the hole formed in the workpiece W. Then, the control apparatus 4 generates, by using the workpiece measurement information, the processing control information that is used by the control apparatus 4 to control at least one of the processing unit 1, the measurement unit 2, and the stage unit 3 to process the inner wall defining the hole formed in the workpiece W. Then, the control apparatus 4 controls, based on the processing control information, at least one of the processing unit 1, the measurement unit 2, and the stage unit 3 to process the inner wall defining the hole formed in the workpiece W.

Note that the control apparatus 4 may generate the measurement control information based on the workpiece information generated before the processing unit 1 starts processing the workpiece W (namely, the workpiece information generated at the step S14) in the process of performing at least one of the first to third processing operations. Namely, the control apparatus 4 may generate the measurement control information based on the workpiece information generated before the processing unit 1 starts processing the workpiece W in at least a part of a non-processing period that is a period before the processing unit 1 starts processing the workpiece W. This measurement control information may include information for controlling at least one of the processing unit 1, the measurement unit 2, and the stage unit 3 to measure the workpiece W in at least a part of the processing period after the processing unit 1 starts processing the workpiece W. This measurement control information may include information for controlling at least one of the processing unit 1, the measurement unit 2, and the stage unit 3 to measure the workpiece W in at least a part of the non-processing period before the processing unit 1 starts processing the workpiece W. The measurement control information may include information for controlling at least one of the processing unit 1, the measurement unit 2, and the stage unit 3 to measure the workpiece W in at least a part of a post-processing period after the processing unit 1 has finished processing the workpiece W.

Moreover, the control apparatus 4 may generate the measurement control information based on the workpiece information regenerated after the processing unit 1 starts processing the workpiece W (namely, the workpiece information regenerated at the step S43) in the process of performing at least one of the fourth to fifth processing operations. Namely, the control apparatus 4 may generate the measurement control information based on the workpiece information regenerated after the processing unit 1 starts processing the workpiece W in at least a part of the processing period after the processing unit 1 starts processing the workpiece W. This measurement control information may include the information for controlling at least one of the processing unit 1, the measurement unit 2, and the stage unit 3 to measure the workpiece W in at least a part of the processing period after the processing unit 1 starts processing the workpiece W. This measurement control information may include the information for controlling at least one of the processing unit 1, the measurement unit 2, and the stage unit 3 to measure the workpiece W in at least a part of the non-processing period before the processing unit 1 starts processing the workpiece W. The measurement control information may include the information for controlling at least one of the processing unit 1, the measurement unit 2, and the stage unit 3 to measure the workpiece W in at least a part of the post-processing period after the processing unit 1 has finished processing the workpiece W.

Moreover, when at least one of the measurement apparatuses 211 and 212 measures the plurality of workpieces W having the same shape and size in order, the processing system SYSa may perform the same operation as the sixth processing operation. Specifically, when it is determined that the shape difference is smaller than the allowable threshold value TH5, the control apparatus 4 may use the measurement control information generated for measuring the workpiece W#1 as the measurement control information for measuring each of workpieces W#2 to W#N, instead of newly generating the measurement control information for measuring each of the workpieces W#2 to W#N.

### (2) Processing System SYSb in Second Example Embodiment

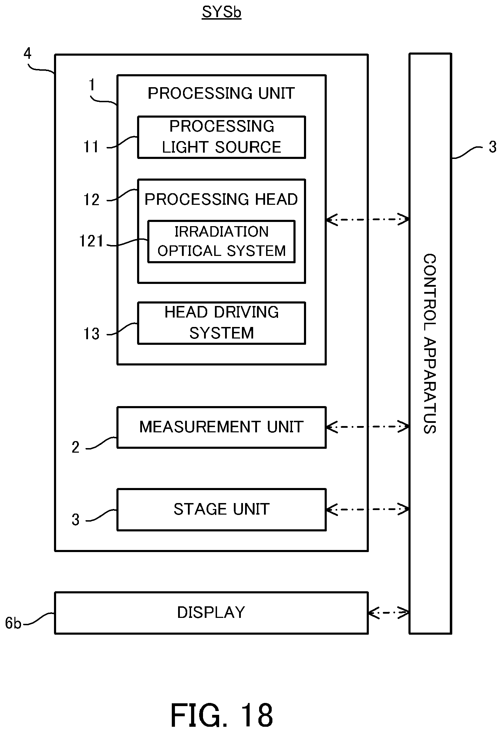

Next, with reference to FIG. 18, a processing system SYS in a second example embodiment (in the below-described description, the processing system SYS in the second example embodiment is referred to as a "processing system SYSb") will be described. FIG. 18 is a system configuration diagram that illustrates a system configuration of the processing system SYSb in the second example embodiment. Note that a detailed description of a component that has been already described is omitted by assigning same reference number to it.

As illustrated in FIG. 18, the processing system SYSb in the second example embodiment is different from the above-described processing system SYSa in the first example embodiment in that it includes a display 6b. Other feature of the processing system SYSb may be the same as other feature of the processing system SYSa.

The display 6b is a display apparatus that is configured to display a desired image under the control of the control apparatus 4. In the second example embodiment, the display 6b may display an image including information related to the workpiece W.

For example, as described above, the workpiece W includes the first area W1 whose shape has been measured by at least one of the measurement apparatuses 211 and 212 and the second area W2 whose shape has not been measured by the measurement apparatus 211 and whose shape has not been measured by the measurement apparatus 212. In other words, the workpiece W includes the first area W1 processed based on the workpiece measurement information that is the measured result by at least one of the measurement apparatuses 211 and 212, and the second area W2 that is processed based on the model information. In this case, the display 6b may display an image including workpiece shape information representing the shape of the workpiece W, first area information representing the first area W1, and second area information representing the second area W2.

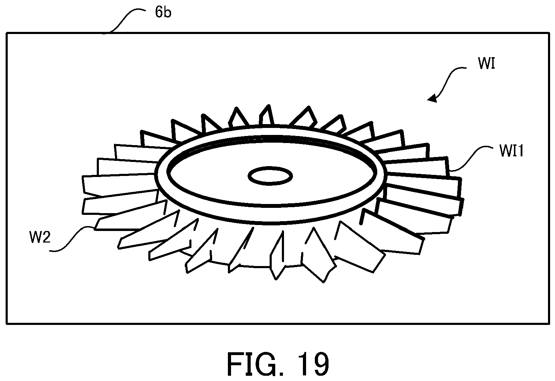

One example of the image including the workpiece shape information, the first area information, and the second area information is illustrated in FIG. 19. As illustrated in FIG. 19, the display 6b may display a workpiece image WI, which is obtained by capturing an image of the workpiece W or imitating the workpiece W, in a display manner in which a first image part WI1 corresponding to the first area W1 and the second image part WI2 corresponding to the second area W2 is distinguishable from each other. In this case, it can be said that the display 6b superimposes the first image part WI1 corresponding to the first area information and the second image part WI2 corresponding to the second area information on the workpiece image WI corresponding to object information. At least one of a display manner in which a color of the first image part WI1 is different from a color of the second image part WI2 and a display manner in which a brightness of the first image part WI1 is different from a brightness of the second image part WI2 is one example of the display manner in which the first image part WI1 and the second image part WI2 are distinguishable from each other is. Note that at least one of the workpiece image WI, the first image part WI1 and the second image part WI2 may be generated from model information.

The display 6b may display the image including the information related to the workpiece W (for example, the workpiece image WI in which the first image part WI1 and the second image part WI2 are distinguishable from each other illustrated in FIG. 19) before the processing unit 1 starts processing the workpiece W. In this case, the display 6b may display the image including the object information representing the shape of the workpiece W that has not yet been processed (for example, the workpiece image WI obtained by capturing the image of the workpiece W before processing or imitating the workpiece W that has not yet been processed).

The display 6b may display the image including the information related to the workpiece W (for example, the workpiece image WI in which the first image part WI1 and the second image part WI2 are distinguishable from each other illustrated in FIG. 19) in at least part of the processing period in which the processing unit 1 processes the workpiece W. In this case, the display 6b may display the image including the object information representing the shape of the workpiece W that is being processed (for example, the workpiece image WI obtained by capturing the image of the workpiece W under processing or imitating the workpiece W that is being processed).

The display 6b may display the image including the information related to the workpiece W (for example, the workpiece image WI in which the first image part WI1 and the second image part WI2 are distinguishable from each other illustrated in FIG. 19) after the processing unit 1 has finished processing the workpiece W. In this case, the display 6b may display the image including the object information representing the shape of the workpiece W that has been already processed (for example, the workpiece image WI obtained by capturing the image of the workpiece W after processing or imitating the workpiece W that has been already processed).

The above-described processing system SYSb in the second example embodiment is capable of achieving an effect that is same as an effect achievable by the processing system SYSa in the first example embodiment. Furthermore, the processing system SYSb displays the image including the workpiece shape information, the first area information, and the second area information. Thus, the operator of the processing system SYSb can recognize whether each part of the workpiece W has been processed based on the workpiece measurement information or has been processed based on the model information.

Note that the first area W1 of the workpiece W is processed based on the workpiece measurement information obtained by actually measuring the first area W1. Thus, there is a relatively high possibility that the shape of the first area W1 that has been already processed matches the designed shape of the workpiece W after processing. Namely, there is a relatively high possibility that the first area W1 has been processed with high accuracy (in other words, with high quality). On the other hand, the second area W2 of the workpiece W is processed based on the model information instead of the workpiece measurement information obtained by actually measuring the second area W2. Thus, there is a possibility that the shape of the second area W2 that has been already processed does not match the designed shape of the workpiece W after processing. Namely, there is a possibility that the second area W2 has not been processed with high accuracy (in other words, with high quality). In this case, the operator of the processing system SYSb can distinguish between the first area W1, which has a relatively high possibility of being processed with high accuracy, and the second area W2, which has a possibility of not being processed with high accuracy, by referring to the image displayed on the display 6b described above. As a result, the operator can check the processing quality of the second area W2 intensively. Namely, the image including the first area information and the second area information is usable as information indicating the processing quality of the workpiece W. Thus, the control apparatus 4 may store the first area information and the second area information as log information. The log information may be used to evaluate the processing quality of the workpiece W.

Moreover, the processing system SYSb may include a projector (namely, a projection apparatus) configured to project a desired image onto a desired projection surface, in addition to or instead of the display 6b. For example, the projector may project the desired image onto at least a part of the surface of the workpiece W. In this case, at least a part of the surface of the workpiece W is used as the projection surface. For example, the projector may project information related to a detail of the processing that is t performed on the workpiece W onto the surface of the workpiece W. For example, when the workpiece W is processed so that a structure (for example, the riblet structure described above) is formed on the workpiece W, the projector may project, onto the surface of the workpiece W, an image that imitates the structure formed on the workpiece W by the processing operation before the processing unit 1 starts processing the workpiece W. In this case, the operator of the processing system SYSc can visually recognize the structure formed on the workpiece W that is actually placed on the stage 32. For example, the projector may project, onto the surface of the workpiece W, an image that imitates the structure actually formed on the workpiece W by the processing operation after the processing unit 1 has finished processing the workpiece W. In this case, the operator of the processing system SYSc can visually recognize the structure actually formed on the workpiece W that is actually placed on the stage 32.

### (3) Processing System SYSc in Third Example Embodiment

Next, a processing system SYS in a third example embodiment (in the below-described description, the processing system SYS in the third example embodiment is referred to as a "processing system SYSc") will be described. The processing system SYSc in the third example embodiment is different from the above-described processing system SYSa in the first example embodiment in that it may perform an additive processing on the workpiece W by irradiating the workpiece W with the processing light EL. For example, the processing system SYSc may form a three-dimensional structural object on the workpiece W by performing the additive processing.

As one example, the processing system SYSc may perform the additive processing based on a Laser Metal Deposition (LMD). In this case, the processing system SYSc may form a build object by processing a build material M by the processing light EL. The build material M is a material that is molten by an irradiation with the processing light EL having a predetermined intensity or more intensity. At least one of a metal material and a resin material is usable as the build material M, for example. However, another material that is different from the metal material and the resin material may be used as the build material M. The build materials Mare powder-like or grain-like materials. Namely, the build materials M are powdery materials. However, the build materials M may not be the powdery materials. For example, at least one of a wired-like build material and a gas-like build material may be used as the build material M, for example, however, the processing system SYSc may form the three-dimensional structural object ST by performing the additive processing based on another additive processing method.

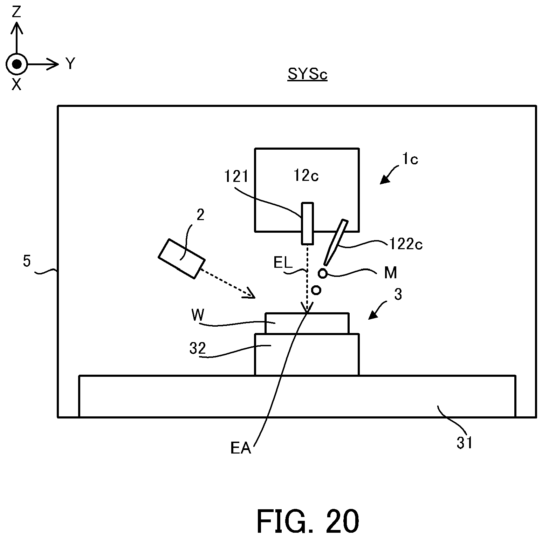

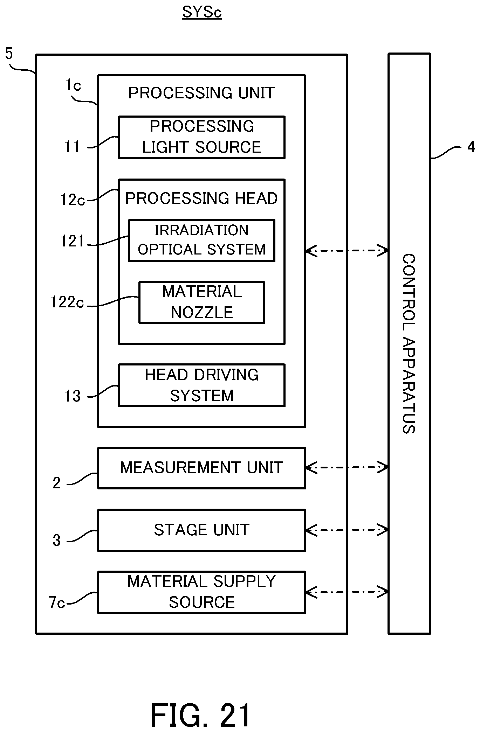

FIG. 20 and FIG. 21 illustrate one example of the processing system SYSc in the third example embodiment performing the additive processing based on the Laser Metal Deposition. FIG. 20 is a system configuration diagram that illustrates a system configuration of the processing system SYSc in the third example embodiment. FIG. 21 is a perspective view that illustrates an entire configuration of the processing system SYSc in the third example embodiment. As illustrated in FIG. 20 and 21, the processing system SYSc in the third example embodiment is different from the above-described processing system SYSa in the first example embodiment in that it includes a processing unit 1c instead of the processing unit 1. The processing system SYSc is different from the above-described processing system SYSa in that it includes a material supply source 7c. Other feature of the processing system SYSc may be the same as other feature of the processing system SYSa.

The processing unit 1c is different from the processing unit 1 in that it includes a processing head 12c instead of the processing head 12. Other feature of the processing unit 1c may be the same as other feature of the processing unit 1. The processing head 12c is different from the processing head 12 in that it further includes a material nozzle 122c. Other feature of the processing head 12c may be the same as other feature of the processing head 12.

The material nozzle 122c supplies (for example, injects, jets, blows out or sprays) the build materials M. Thus, the material nozzle 122c may be referred to as a material supply apparatus. Specifically, the material nozzle 122c is physically connected to the material supply source 7c, which is a supply source of the build materials M, through a non-illustrated supply pipe. The material nozzle 122c supplies the build materials M supplied from the material supply source7c. A position of the material nozzle 122c may be adjusted relative to the irradiation optical system 121 so as to supply the build materials M to the irradiation position of the processing light EL from the irradiation optical system 121. Note that the positions of the material nozzle 122c and the irradiation optical system 121 may be adjusted so that the material nozzle 122c supplies the build materials M to a melt pool formed by the processing light EL emitted from the irradiation optical system 121. Note that the material nozzle 122c may not supply the build materials M to the melt pool. For example, the processing system SYSc may melt the build materials M by the processing light EL from the irradiation optical system 121 before the build materials M from the material nozzle 122c reach the melt pool, and may allow the molten build material M to be adhered to the workpiece W.

The processing system SYSc in the third example embodiment is capable of properly performing the additive processing on the workpiece W. Furthermore, the processing system SYSc is capable of achieving an effect that is same as an effect achievable by the processing system SYSa in the first example embodiment.

### (4) Processing System SYSd in Fourth Example Embodiment

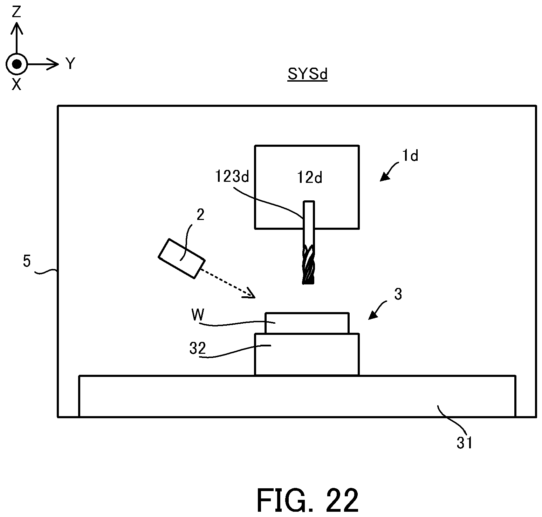

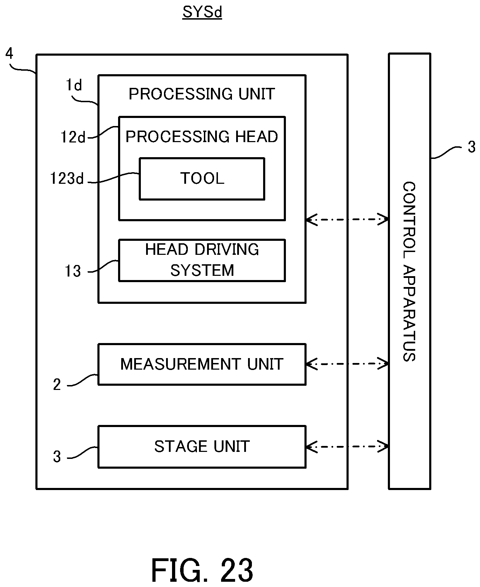

Next, a processing system SYS in a fourth example embodiment (in the below-described description, the processing system SYS in the fourth example embodiment is referred to as a "processing system SYSd") will be described. The processing system SYSd in the fourth example embodiment is different from the above-described processing system SYSa in the first example embodiment in that it may process the workpiece W by using a tool 123d (see FIG. 22 and FIG. 23 described below) for performing a machining processing on the workpiece W in addition to or instead of the processing light EL. Namely, the processing system SYSd is different from the processing system SYSa in that it may perform the machining processing on the workpiece W. For example, the processing system SYSd may perform a cutting processing, a grinding processing, a polishing processing or a cutting-off processing on the workpiece W by making the tool 123d contact with the workpiece W. For example, the processing system SYSd may perform the machining processing on the workpiece W so that the shape of the workpiece W is a desired shape. For example, the processing system SYSd may perform the machining processing on the workpiece W to form a desired structure on the workpiece W. For example, the processing system SYSb may perform the machining processing on the workpiece W to form a desired structure on the surface of the workpiece W. For example, the processing system SYSb may perform the machining processing on the workpiece W so that the surface of the workpiece W is polished.

FIG. 22 and FIG. 23 illustrates one example of the processing system SYSd in the fourth example embodiment. FIG. 22 is a block diagram that illustrates a system configuration of the processing system SYSd in the fourth example embodiment. FIG. 23 is a cross-sectional view that illustrates a configuration of the processing system SYSd in the fourth example embodiment. As illustrated in FIG. 22 and FIG. 23, the processing system SYSd is different from the processing system SYSa in that it may not include the processing light source 11. Furthermore, the processing system SYSd is different from the processing system SYSa in that it may not include the irradiation optical system 121. Specifically, the processing system SYSd is different from the processing system SYSa in that it includes a processing unit 1d including a processing head 12d that does not include the irradiation optical system 121 instead of the processing unit 1 including the processing head 12 that includes the irradiation optical system 121. Namely, the processing system SYSd is different from the processing system SYSa in that it may not include a component for irradiating the workpiece W with the processing light EL. Furthermore, the processing system SYSd is different from the processing system SYSa in that it includes the processing head 12d that includes the tool 123d instead of the processing head 12. Oher feature of the processing system SYSd may be same as Other feature of the processing system SYSa.

The processing system SYSd in the fourth example embodiment is capable of properly performing the machining processing on the workpiece W. Furthermore, the processing system SYSd is capable of achieving an effect that is same as an effect achievable by the processing system SYSa in the first example embodiment.

### (5) Other Modified Example

In the above-described description, the processing unit 1 includes the head driving system 13. However, the processing unit 1 may not include the head driving system 13. Namely, the processing head 12 may not move. In the above-described description, the processing unit 1 includes the head driving system 22. However, the processing unit 1 may not include the head driving system 22. Namely, the measurement head 21 may not move. In the above-described description, the stage unit 3 includes the stage driving system 33. However,. the stage unit 3 may not include the stage driving system 33. Namely, the stage 32 may not move.

In the above-described description, the processing unit 1 (especially, at least one of the processing unit 1 in the first and second example embodiments and the processing unit 1c in the third example embodiment) processes the workpiece W by irradiating the workpiece W with the processing light EL. However, the processing unit 1 may process the workpiece W by irradiating the workpiece W with any energy beam (this energy beam may be referred to as a "processing beam") that is different from a light. In this case, the processing unit 1 may include a beam source that is configured to generate any energy beam in addition to or instead of the processing light source 11. A charged particle beam such as an electron beam, an ion beam and the like is one example of any energy beam. An electromagnetic wave is another example of any energy beam.

Features of each embodiment described above may be properly combined with each other. A part of the features of each embodiment described above may not be used. A feature of each embodiment described above may be properly replaced by a feature of another embodiment. Moreover, the disclosures of all publications and United States patents that are cited in each embodiment described above are incorporated in the disclosures of the present application by reference if it is legally permitted.

The present invention is allowed to be changed, if desired, without departing from the essence or spirit of the invention which can be read from the claims and the entire specification, and a processing system and a display apparatus, which involve such changes, are also intended to be within the technical scope of the present invention.

### Description of Reference Codes

- 1: processing unit
- 12: processing head
- 13: head driving system
- 2: measurement unit
- 21: measurement head
- 211, 212: measurement apparatus
- 22: head driving system
- 3: stage unit
- 32: stage
- 33: stage driving system
- 4: control apparatus
- EL: processing light
- SYS: processing system
- W: workpiece

## Claims

1. A processing system comprising:
a processing apparatus configured to process an object;
a measurement apparatus configured to measure a three-dimensional shape of at least a part of the object; and
a control apparatus configured to control the processing apparatus,
the control apparatus controlling the processing apparatus based on three-dimensional shape information of a second area of a surface of the object, the three-dimensional shape information being calculated based on a measured result and model information, the measured result being obtained by measuring a first area of the surface of the object by using the measurement apparatus, the model information indicating a three-dimensional model of at least a part of the obj ect,
the three-dimensional shape information of the second area being calculated without performing a measurement of a three-dimensional shape of the second area by the measurement apparatus,
at least a part of the second area being processed by the processing apparatus based on the three-dimensional shape information of the second area.

2. A processing system comprising:
a processing apparatus configured to process an object;
a measurement apparatus configured to measure a three-dimensional shape of at least a part of the object; and
a display apparatus configured to display information related to the object,
the display apparatus displaying, after the processing apparatus processes the object:
object information indicating a shape of the processed object;
first processing area information indicating a first processing area that has been processed based on a measured result by the measurement apparatus; and
second processing area information indicating a second processing area that has been processed based on model information indicating a three-dimensional model of at least a part of the object.

3. The processing system according to claim 1, wherein
the measurement apparatus is a first measurement apparatus,
the processing system further comprises a second measurement apparatus configured to measure a three-dimensional shape of at least a part of the object,
a measurement accuracy of the second measurement apparatus is lower than a measurement accuracy of the first measurement apparatus,
the three-dimensional shape information of the second area is calculated based on the measured result obtained by measuring the first area by using the first measurement apparatus, the model information, and a measured result obtained by measuring the second area by using the second measurement apparatus.

4. The processing system according to claim 2, wherein
the measurement apparatus is a first measurement apparatus,
the processing system further comprises a second measurement apparatus configured to measure a three-dimensional shape of at least a part of the object,
a measurement accuracy of the second measurement apparatus is lower than a measurement accuracy of the first measurement apparatus,
the second processing area is an area that has been processed based on the model information and a measured result by the second measurement apparatus.

5. The processing system according to claim 1 or 3, wherein
when the measurement apparatus is disposed at a first predetermined position in the processing system, the first area of the object that is disposed at a second predetermined position in the processing system is included in a measurable range of the measurement apparatus and the second area of the object that is disposed at the second predetermined position in the processing system includes a part that is not included in the measurable range of the measurement apparatus.

6. The processing system according to claim 2 or 4, wherein
when the measurement apparatus is disposed at a first predetermined position in the processing apparatus, the first processing area of the object that is disposed at a second predetermined position in the processing apparatus is included in a measurable range of the measurement apparatus and the second processing area of the object that is disposed at the second predetermined position in the processing apparatus includes a part that is not included in the measurable range of the measurement apparatus.

7. The processing system according to claim 1, 3 or 5, wherein
the processing system further comprises a display apparatus configured to display information related to the object,
the display apparatus displays first area information indicating the first area and second area information indicating the second area together with object information indicating a shape of the obj ect.

8. The processing system according to claim 1, 3, 5 or 7, wherein
the measurement apparatus measures the three-dimensional shape of at least a part of the object before the processing apparatus starts processing the object,
the control apparatus calculates a three-dimensional shape of the first area before the processing apparatus starts processing the object.

9. The processing system according to claim 2, 4 or 6, wherein
the measurement apparatus measures the three-dimensional shape of at least a part of the object before the processing apparatus starts processing the object,
the processing system comprising a control apparatus configured to calculate three-dimensional shapes of at least the first processing area and the second processing area before the processing apparatus starts processing the object.

10. The processing system according to claim 1, 3, 5, 7 or 8, wherein
the control apparatus is configured to correct processing control information based on a three-dimensional shape of at least the first area, the processing control information is for processing the object,
the processing apparatus is configured to process the object based on the corrected processing control information.

11. The processing system according to claim 2, 4, 6 or 9, wherein
the display apparatus display the first processing area information and the second processing area information so that the first processing area information and the second processing area information are superimposed with an object information indicating the object.

12. The processing system according to claim 1, 3, 5, 7, 8 or 10, wherein
the second area is an area adjacent to the first area.

13. A processing system comprising:
a processing apparatus configured to process an object;
a measurement apparatus configured to measure a shape of at least a part of the object; and
a control apparatus configured to control the processing apparatus,
the control apparatus controlling the processing apparatus based on a measured result and model information, the measured result being obtained by measuring a first area of a surface of the object by using the measurement apparatus, the model information indicating a shape of a second area of the surface of the object.

14. A processing system comprising:
a processing apparatus configured to process an object;
a measurement apparatus configured to measure a shape of at least a part of the object; and
a display apparatus configured to display information related to the object,
the display apparatus displaying:
object information indicating a shape of the processed object;
first processing area information related to a first processing area that has been processed based on a measured result by the measurement apparatus; and
second processing area information related to a second processing area that has been processed based on at least a part of model information indicating a model of the object.

15. The processing system according to claim 13, wherein
the measurement apparatus is a first measurement apparatus,
the processing system further comprises a second measurement apparatus configured to measure a shape of at least a part of the object,
a measurement accuracy of the second measurement apparatus is lower than a measurement accuracy of the first measurement apparatus,
the processing system calculates shape information of the second area based on the measured result obtained by measuring the first area by using the first measurement apparatus, the model information, and a measured result obtained by measuring the second area by using the second measurement apparatus.

16. The processing system according to claim 14, wherein
the measurement apparatus is a first measurement apparatus,
the processing system further comprises a second measurement apparatus configured to measure a shape of at least a part of the object,
a measurement accuracy of the second measurement apparatus is lower than a measurement accuracy of the first measurement apparatus,
the second processing area is an area that has been processed based on the model information and a measured result by the second measurement apparatus.

17. The processing system according to claim 13 or 15, wherein
the measurement apparatus is fixedly disposed in the processing system,
the first area of the object that is fixedly disposed in the processing system is included in a measurable range of the measurement apparatus,
the second area of the object that is fixedly disposed in the processing system includes a part that is not included in the measurable range of the measurement apparatus.

18. The processing system according to claim 14 or 16, wherein
the measurement apparatus is fixed disposed in the processing apparatus,
the first processing area of the object that is fixedly disposed in the processing apparatus is included in a measurable range of the measurement apparatus,
the second processing area of the object that is fixedly disposed in the processing apparatus includes a part that is not included in the measurable range of the measurement apparatus.

19. The processing system according to claim 13, 15 or 17, wherein
the measurement apparatus is movable,
the first area of the object that is located at a first predetermined position of the processing apparatus is included in a measurable range of the measurement apparatus that is located at a second predetermined position,
the second area of the object that is located at the first predetermined position of the processing apparatus includes a part that is not included in the measurable range of the measurement apparatus that is located at the second predetermined position.

20. The processing system according to claim 14, 16 or 18, wherein
the measurement apparatus is movable,
the first processing area of the object that is located at a first predetermined position of the processing apparatus is included in a measurable range of the measurement apparatus that is located at a second predetermined position,
the second processing area of the object that is located at the first predetermined position of the processing apparatus includes a part that is not included in the measurable range of the measurement apparatus that is located at the second predetermined position.

21. The processing system according to claim 13, 15, 17 or 19, wherein
the processing system further comprises a display apparatus configured to display information related to the object,
the display apparatus displays first area information indicating the first area and second area information indicating the second area together with object information indicating a shape of the obj ect.

22. The processing system according to claim 13, 15, 17, 19 or 21, wherein
the measurement apparatus measures the shape of at least a part of the object before the processing apparatus starts processing the object,
the control apparatus calculates a shape of the first area before the processing apparatus starts processing the object.

23. The processing system according to claim 15 wherein
the first and second measurement apparatuses measure the shape of at least a part of the object before the processing apparatus starts processing the object,
the control apparatus calculates shape of at least the first area and the second area before the processing apparatus starts processing the object.

24. The processing system according to any one of claims 13, 15, 17, 19 and 21 to 23, wherein
the control apparatus is configured to correct processing control information based on a shape of at least the first area, the processing control information is for processing the object,
the processing apparatus is configured to process the object based on the corrected processing control information.

25. The processing system according to any one of claims 14, 16, 18 and 20, wherein
the display apparatus display the first processing area information and the second processing area information so that the first processing area information and the second processing area information are superimposed with an object information indicating the object.

26. The processing system according to claim 21, wherein
the display apparatus displays at least one of the first and second area information before the processing apparatus starts processing the object.

27. The processing system according to claim 21 or 26, wherein
the display apparatus displays at least one of the first and second area information in a period during which the processing apparatus processes the object.

28. The processing system according to claim 21, 26 or 27, wherein
the display apparatus displays at least one of the first and second area information after the processing apparatus completes processing the object.

29. The processing system according to claim 14, 16, 18, 20 or 25, wherein
the display apparatus displays at least one of the first and second processing area information in a period during which the processing apparatus processes the object.

30. The processing system according to claim 14, 16, 18, 20, 25 or 29, wherein
the display apparatus displays at least one of the first and second processing area information after the processing apparatus completes processing the object.

31. The processing system according to any one of claims 21 and 26 to 28, wherein
the display apparatus displays the first and second area information together with object information indicating a shape of the object that is not yet processed.

32. The processing system according to any one of claims 21, 26 to 28 and 31, wherein
the display apparatus displays the first and second area information together with object information indicating a shape of the object that has been already processed.

33. The processing system according to any one of claims 21, 26 to 28 and 31 to 32, wherein
the display apparatus displays the first and second area information together with object information indicating a shape of the object that is being processed.

34. The processing system according to claim 14, 16, 18, 20, 25, 29 or 30, wherein
the display apparatus displays the first and second processing area information together with object information indicating a shape of the object that is not yet processed.

35. The processing system according to claim 14, 16, 18, 20, 25, 29, 30 or 34, wherein
the display apparatus displays the first and second processing area information together with object information indicating a shape of the object that has been already processed.

36. The processing system according to claim 14, 16, 18, 20, 25, 29, 30, 34 or 35, wherein
the display apparatus displays the first and second processing area information together with object information indicating a shape of the object that is being processed.

37. The processing system according to any one of claims, 13, 15, 17, 19, 21 to 24, 26 to 28 and 31 to 33, wherein
the second area is an area adjacent to the first area,
shape information of the second area is calculatable without measuring a shape of second area by the measurement apparatus.

38. The processing system according to any one of claims 1 to 37, wherein
the measurement apparatus measures a shape of at least a part of the object in at least a part of a processing period after the processing apparatus starts processing the object,
the processing system comprises a control apparatus configured to generate processing control information for processing the object and measurement control information for measuring the object based on a measured result by the measurement apparatus in at least a part of the processing period.

39. The processing system according to any one of claims 1, 3, 5, 7, 8, 10, 13, 15, 17, 19, 21 to 24, 26 to 28, 31 to 33 and 37, wherein
the measurement apparatus (i) measures a shape of the first area in at least a part of a non-processing period before the processing apparatus starts processing the object, and (ii) measures a shape of a third area, which is at least a part of the second area, in at least a part of a processing period after the processing apparatus starts processing the object,
the control apparatus (i) generates at least one of processing control information for processing the object and measurement control information for measuring the object by using a measured result obtained by measuring the first area by using the measurement apparatus and shape information of the second area calculated based on the model information in at least a part of the non-processing period, and (ii) generates at least one of the processing control information and the measurement control information by using a measured result obtained by measuring the first and third areas by using the measurement apparatus and shape information of the second area calculated based on the model information in at least a part of the processing period.

40. The processing system according to claim 39, wherein
the second area is not included in a measurable range of the measurement apparatus in the non-processing period,
the second area is included in the measurable range in the processing period.

41. The processing system according to claim 39 or 40, wherein
the processing system further comprises a position change apparatus configured to change a positional relationship between the object and the measurement apparatus,
the measurement apparatus measures the shape of the second area when the position change apparatus changes the positional relationship so that the second area is included in the measurable range of the measurement apparatus in the processing period.

42. The processing system according to any one of claims 39 to 41, wherein
the control apparatus generates at least one of the processing control information and the measurement control information when a difference between a shape of the second area indicated by the measured result and a shape of the second area indicated by the model information is larger than an allowable threshold value in at least a part of the processing period.

43. The processing system according to claim 42, wherein
the control apparatus does not generate at least one of the processing control information and the measurement control information when the difference is not larger than the allowable threshold value in at least a part of the processing period.

44. The processing system according to any one of claims 1, 3, 5, 7, 8, 10, 13, 15, 17, 19, 21 to 24, 26 to 28, 31 to 33, 37 and 39 to 42, wherein
the measurement apparatus is a first measurement apparatus,
the processing system further comprises a second measurement apparatus configured to measure a shape of at least a part of the object,
a measurement accuracy of the second measurement apparatus is lower than a measurement accuracy of the first measurement apparatus,

45. The processing system according to claim 44, wherein
the control apparatus generates at least one of processing control information for processing the object and measurement control information for measuring the object by using a measured result obtained by measuring the first area by using at least one of the first and second measurement apparatuses and shape information of the second area calculated based on the model information.

46. The processing system according to claim 44 or 45, wherein
the first measurement apparatus measures a three-dimensional shape of the first area when a difference between a shape of the first area indicated by a measured result by the second measurement apparatus and a shape of the first area indicated by the model information is larger than an allowable threshold value,
the control apparatus generates at least one of processing control information for processing the object and measurement control information for measuring the object by using a measured result obtained by measuring the first area by using the first measurement apparatus and shape information of the second area calculated based on the model information.

47. The processing system according to any one of claims 1, 3, 5, 7, 8, 10, 13, 15, 17, 19, 21 to 24, 26 to 28, 31 to 33, 37 and 39 to 46, wherein
the control apparatus generates measurement control information for measuring a shape of a third area of the object by using a measured result obtained by measuring the first area by using the measurement apparatus and shape information of the second area calculated based on the model information.

48. The processing system according to claim 47, wherein
the processing system further comprises a position change apparatus configured to change a positional relationship between the object and the measurement apparatus,
the position change apparatus changes the positional relationship based on the measurement control information after the measurement apparatus measures a shape of the first area so that the third area is included in a measurable range of the measurement apparatus,
the measurement apparatus measures the shape of the third area after the position change apparatus changes the positional relationship so that the third area is included in the measurable range.

49. The processing system according to claim 47 or 48, wherein
the third area is not included in a measurable range of the measurement apparatus in a period during which the measurement apparatus measures the first area.

50. The processing system according to any one of claims 47 to 49, wherein
the control apparatus generates processing control information for processing the object by using a measured result obtained by measuring the first and third areas by using the measurement apparatus and shape information of the second area calculated based on the model information.

51. The processing system according to any one of claims 1, 3, 5, 7, 8, 10, 13, 15, 17, 19, 21 to 24, 26 to 28, 31 to 33, 37 and 39 to 50, wherein
(i) the measurement apparatus measures a shape of a third area of the object and (ii) the control apparatus generates at least one of processing control information for processing the object and measurement control information for measuring the object by using a measured result obtained by measuring the first and third areas by using the measurement apparatus, when a difference between a shape of the first area indicated by a measured result by the measurement apparatus and a shape of the first area indicated by the model information is larger than an allowable threshold value.

52. The processing system according to claim 51, wherein
the control apparatus generates at least one of the processing control information and the measurement control information by using a measured result obtained by measuring the first and third areas by using the measurement apparatus and without using the model information.

53. The processing system according to any one of claims 1, 3, 5, 7, 8, 10, 13, 15, 17, 19, 21 to 24, 26 to 28, 31 to 33, 37 and 39 to 52, wherein
the control apparatus generates at least one of processing control information for processing the object and measurement control information for measuring the object by using a measured result obtained by measuring the first area and a third area of the object by using the measurement apparatus and shape information of the second area calculated based on the model information.

54. The processing system according to any one of claims 51 to 53, wherein
the measurement apparatus measures shapes of plurality of different third areas.

55. The processing system according to any one of claims 51 to 54, wherein
the processing system further comprises a position change apparatus configured to change a positional relationship between the object and the measurement apparatus,
the position change apparatus changes the positional relationship after the measurement apparatus measures a shape of the first area so that the third area is included in a measurable range of the measurement apparatus,
the measurement apparatus measures the shape of the third area after the position change apparatus changes the positional relationship so that the third area is included in the measurable range.

56. The processing system according to claim 55, wherein
the third area is not included in a measurable range of the measurement apparatus in a period during which the measurement apparatus measures the first area.

57. The processing system according to any one of claims 1, 3, 5, 7, 8, 10, 13, 15, 17, 19, 21 to 24, 26 to 28, 31 to 33, 37 and 39 to 56, wherein
the object includes a first object and a second object that has a same shape as the first obj ect,
when the second object is processed in a same manner as the first object after the processing system processes the first object in a situation where a difference between a shape of the first area of the first object indicated by a measured result by the measurement apparatus and a shape of the first area indicated by the model information is not larger than an allowable threshold value, (i) the measurement apparatus does not measure a shape of the first area of the second object, and (ii) the second object is processed by using processing control information generated to process the first object and / or the second object is measured by using measurement control information generated to measure the first object.

58. The processing system according to any one of claims 1, 3, 5, 7, 8, 10, 13, 15, 17, 19, 21 to 24, 26 to 28, 31 to 33, 37 and 39 to 57, wherein
the object includes a first object and a second object that has a same shape as the first obj ect,
when the second object is processed in a same manner as the first object after the processing system processes the first object in a situation where a difference between a shape of the first area of the first object indicated by a measured result by the measurement apparatus and a shape of the first area indicated by the model information is not larger than an allowable threshold value, (i) the measurement apparatus measures a shape of the first area of the second object that distributes in an area narrower than the first area of the first object, and (ii) the control apparatus generates at least one of processing control information for processing the second object and measurement control information for measuring the second object by using a measured result obtained by measuring the first area of the second object by using the measurement apparatus.

59. The processing system according to any one of claims 10, 24, 38 to 43, 45 to 46 and 51 to 58, wherein
the processing control information includes information for changing a positional relationship between the object and the processing apparatus.

60. The processing system according to any one of claims 38 to 43 and 45 to 58, wherein
the measurement control information includes information for changing a positional relationship between the object and the measurement apparatus.

61. The processing system according to any one of claims 1 to 60, wherein
the processing apparatus processes the object by irradiating the object with a processing light.

62. The processing system according to any one of claims 1 to 61, wherein
the processing apparatus performs a removal processing or an additive processing of the object.

63. The processing system according to any one of claims 1 to 62, wherein
the processing apparatus performs a machining processing of the object.

64. A processing system comprising:
a processing apparatus configured to process an object;
a measurement apparatus configured to measure a shape of at least a part of the object; and
a display apparatus configured to display information related to the object,
the display apparatus displaying the information related to the object based on a result by the measurement apparatus and model information indicating a model of the object.

65. A processing system comprising:
a processing apparatus configured to process an object;
a measurement apparatus configured to measure a shape of at least a part of the object; and
a control apparatus configured to control the processing apparatus,
the measurement apparatus measuring a second area of a surface of the object based on a measured result obtained by measuring a first area of the surface of the object and model information indicating a shape of the second area of the surface of the object,
the control apparatus controlling the processing apparatus based on at least a measured result of the second area.

66. A processing system comprising:
a processing apparatus configured to process an object;
a first measurement apparatus configured to measure a shape of at least a part of the obj ect;
a second measurement apparatus configured to measure a shape of at least a part of the object; and
a control apparatus configured to control the processing apparatus,
the second measurement apparatus measuring a second area of a surface of the object based on a first measured result obtained by measuring a first area of the surface of the object by the first measurement apparatus and model information indicating a shape of the second area of the surface of the object,
the control apparatus controlling the processing apparatus based on at least a measured result of the second area.

67. A display apparatus that is configured to display information related to an object,
the object being processed by a processing system,
the processing system including:
a processing apparatus configured to process an object;
a measurement apparatus configured to measure a shape of at least a part of the object; and
a control apparatus configured to control the processing apparatus based on a measured result obtained by measuring a first area of a surface of the object by using the measurement apparatus and model information indicating a shape of a second area of the surface of the object,
the display apparatus displaying: object information indicating a shape of the processed object; first area information related to the first area; and second area information related to the second area.

68. A display apparatus that is configured to display information related to an object,
the object being processed by a processing system,
the processing system including:
a processing apparatus configured to process an object; and
a measurement apparatus configured to measure a shape of at least a part of the object,
the display apparatus displaying: object information indicating a shape of the processed object; first processing area information indicating a first processing area that has been processed based on a measured result by the measurement apparatus; and second processing area information indicating a second processing area that has been processed based on at least a part of model information indicating a model of the object.
